# EUROPÄISCHE PATENTSCHRIFT

(11) **EP 3 945 044 B1**
(45) Veröffentlichungstag und Bekanntmachung des Hinweises auf die Patenterteilung: **27.12.2023**
(21) Anmeldenummer: 21188728.6
(22) Anmeldetag: 30.07.2021
(51) Int. Cl.: B65G 1/137, B65G 13/12

(54) **FLURGEBUNDENER STETIGFÖRDERER**
FLOOR-BOUND STEADY CONVEYOR
CONVOYEUR CONTINU AU SOL

(30) Priorität: 31.07.2020 WO PCT/EP2020/071739
(43) Veröffentlichungstag der Anmeldung: 02.02.2022
(73) Patentinhaber: Swisslog GmbH, 44379 Dortmund (DE)
(72) Erfinder: HEITPLATZ, Heino, 48317 Drensteinfurt (DE); GEBHARDT, Dennis, 44139 Dortmund (DE)
(74) Vertreter: Böss, Dieter Alexander

(56) Entgegenhaltungen:
- DE-U1-202015 008 475
- DE-U1-212010 000 076
- JP-A- H0 797 020
- JP-U- H0 434 226
- JP-U- H0 723 713
- KR-B1- 100 764 984
- US-A- 2 344 664
- US-B2- 7 766 151

## Beschreibung

Die Erfindung betrifft einen flurgebundenen Stetigförderer der Intralogistik, aufweisend wenigstens ein Gestell und wenigstens ein Lastaufnahmemittel, das eine Förderebene für Stückgüter aufweist und das ausgebildet ist, die Stückgüter in einer Förderrichtung zu transportieren.

Die DE 10 2012 025 163 A1 beschreibt eine Vorrichtung zur Kommissionierung von Gütern aus Quellbehältern, bestehend aus einer Kommissionierinsel, die über eine Transportvorrichtung mit einem, eine Vielzahl von Lagerplätzen aufweisenden Lager zur Abstellung und Entnahme der Quellbehälter verbunden ist, wobei die Kommissionierinsel aus mindestens einem Kommissioniergerät mit in mindestens zwei Ebenen arbeitenden Längsförderern besteht, welche die zu kommissionierenden Quellbehälter an die Arbeitsfläche eines Kommissionierers fördern und nach erfolgter Kommissionierung wieder abführen. Wenn der Quellbehälter auf einen zweiten Längsförderer übergeben wurde, kommt er in den Bereich eines Kippförderers, der wiederum einen weiteren Längsförderer aufweist, der in einer horizontalen Schwenkachse schwenkbar an einem Vorbau gelagert ist.

Die EP 3 003 918 A1 beschreibt ein Lager- und/oder Kommissioniersystem bei dem sich zwischen der Transportbahn und dem Arbeitsplatz mehrere Handhabungseinrichtungen entlang der Transportbahn befinden, und die Handhabungseinrichtungen jeweils eine Tablarhalterung für wenigstens ein Tablar aufweisen, wobei jede Tablarhalterung von einer horizontalen Ladestellung, in der die Tablarhalterung an die Transportbahn zur Übergabe von Tablaren ankoppelbar ist, in eine horizontal von der Ladestellung beabstandete Zugriffsstellung schwenkbar angeordnet ist, wobei die Schwenkbewegung senkrecht zur Förderrichtung der Transportbahn verläuft, und die Tablarhalterung in der Zugriffsstellung von der Ladestellung wegweisend geneigt ist.

Die JP H07 23713 U beschreibt eine Schwerkraft-Fließregalvorrichtung, in der mehrere Fließregale in Form enger Kehren an einem Gefälle auf- und abwärts installiert sind, wobei die zu transportierenden Objekte aufgrund der Schwerkraft heruntergleiten.

Die DE 20 2015 008 475 U1 beschreibt eine Vorrichtung Z f gemäß dem Oberbegriff des Anspruchs 1 zum Drehen bzw. Orientieren von Stückgütern auf einer Stetigförderanlage um eine horizontale Achse bestehend aus einer Kippvorrichtung mit mindestens einem Schenkel der um eine horizontale Drehachse drehbar ist, eine Fördereinheit zum Zu- und Abfördern der Stückgüter, wobei Schenkel und Drehachse derart angeordnet sind, dass im Zustand der Bereitschaft die Stückgüter auf einen der vorhandenen Schenkel befördert werden und dieses daraufhin um die Drehachse gedreht und wieder abgefördert werden kann. Aufgabe der Erfindung ist es einen flurgebundenen Stetigförderer zu schaffen, bei dem auf einem Lastaufnahmemittel transportierte Stückgüter einem Benutzer in ergonomisch vorteilhafter Weise angedient werden können, wobei der Stetigförderer einfach und platzsparend aufgebaut ist.

Die Aufgabe wird erfindungsgemäß gelöst durch einen flurgebundenen Stetigförderer mit den Merkmalen des Anspruchs 1 und durch ein System mit den Merkmalen des Anspruchs 14.

Ein Aspekt betrifft einen flurgebundenen Stetigförderer der Intralogistik, aufweisend wenigstens ein Gestell und wenigstens ein Lastaufnahmemittel, das eine Förderebene für Stückgüter aufweist und das ausgebildet ist, die Stückgüter in einer Förderrichtung zu transportieren, gekennzeichnet durch ein Anschlagmittel, das ausgebildet ist, ein auf der Förderebene in Förderrichtung transportiertes Stückgut an einer vorbestimmten Position auf dem Lastaufnahmemittel anzuhalten, und gekennzeichnet durch eine Bewegungsvorrichtung, die ausgebildet ist, das an dem Anschlagmittel auf der Förderebene anstehende Stückgut aus seiner auf der Förderebene des Lastaufnahmemittels stehende Ausgangslage in eine von der Ausgangslage abweichende Endlage auf dem Lastaufnahmemittel aus der Förderebene des Lastaufnahmemittels in die Endlage zu bewegen.

Der flurgebundene Stetigförderer kann wenigstens einen Rollenförderer, einen Bandförderer, einen Kettenförderer, einen Schwingförderer und/oder eine Rutsche aufweisen, wobei die Förderebene zumindest im Wesentlichen horizontal oder in einem Winkel bis zu etwa 15 Grad aus der Horizontalen heraus geneigt angeordnet ist. Der Bandförderer kann beispielsweise ein Gurtförderer, ein Segmentbandförderer, ein Plattenbandförderer oder ein Gliederbandförderer sein. Die Erfindung ist im Folgenden überwiegend am Beispiel eines Rollenförderers mit einer Vielzahl von drehbar gelagerten Rollen beschrieben. Es liegt im Rahmen der Erfindung, dass in sämtlichen beschriebenen Ausführungsvarianten die genannte Rollenbahn bzw. der Rollenförderer durch eine der oben genannten anderen Arten von flurgebundenen Stetigförderern ersetzt werden kann. Statt Rollen können in solchen Ausführungen dann, je nach Art des speziellen flurgebundenen Stetigförderers, die Rollen durch Bänder, Gurte, Segmente, Platten oder Glieder ersetzt sein. Die jeweiligen Rollen, Bänder, Gurte, Segmente, Platten oder Glieder der speziellen Art von Stetigförderer bilden dann insoweit das Lastaufnahmemittel. Das Lastaufnahmemittel kann insbesondere auch ein aktives Lastaufnahmemittel umfassen, welches über zumindest einen (eigenen) Antrieb verfügt. Insbesondere kann einer oder mehrerer Rollen ein Antrieb zugeordnet sein bzw. können eine oder mehrere Rollen einen eigenen Antrieb aufweisen. Beispielsweise kann der Antrieb im Rollenkörper angeordnet sein. Weitere Beispiele für ein aktives Lastaufnahmemittel sind Teleskopgabeln und Gurtförderer. Das Lastaufnahmemittel kann auch passiv ausgebildet sein, beispielsweise als Schwerkraftförderer, bei welchem die Last der Schwerkraft folgend verlagert wird.

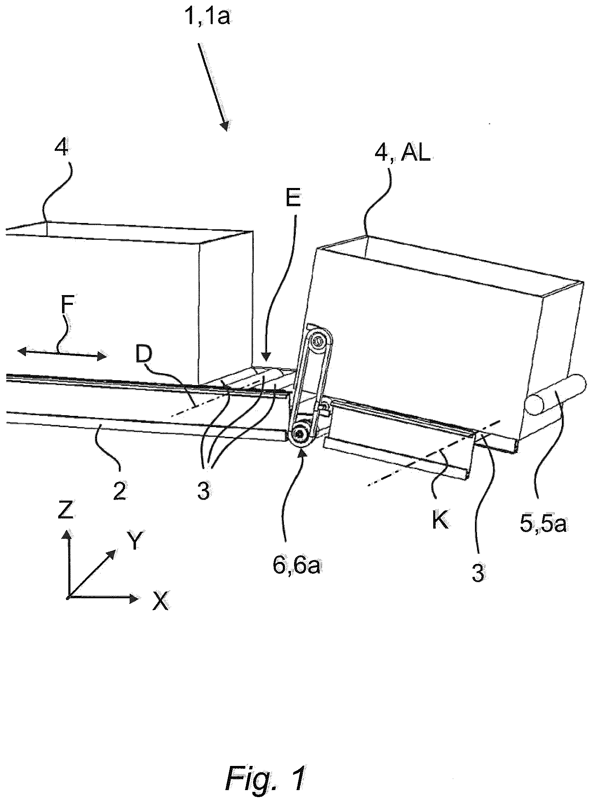

Die Aufgabe wird insoweit in einer speziellen Ausführungsform gelöst durch eine fördertechnische Rollenbahn, aufweisend wenigstens ein Gestell und eine Vielzahl von an dem Gestell drehbar gelagerten, nebeneinander beabstandet angeordneten Rollen, die eine Förderebene für Stückgüter bilden, deren Förderrichtung zumindest im Wesentlichen quer zur Drehachse der Rollen verläuft (d.h. um die X-Achse herum, siehe bspw. Fig. 1), und aufweisend ein Anschlagmittel, das ausgebildet ist, ein auf der Förderebene in Förderrichtung transportiertes Stückgut an einer vorbestimmten Position auf der Rollenbahn zu halten, und eine Bewegungsvorrichtung, insbesondere Kippvorrichtung als bevorzugte Bewegungsvorrichtung, die ausgebildet ist, das an dem Anschlagmittel auf der Förderebene anstehende Stückgut aus seiner auf der Förderebene stehende Ausgangslage in eine von der Ausgangslage abweichende Endlage aus der Förderebene der Rollenbahn zu bewegen bzw. herauszukippen bzw. zu neigen.

Bevorzugt wird der Vorgang des Kippens bzw. Neigens automatisch gestartet, sobald das Stückgut das Anschlagmittel mechanisch kontaktiert bzw. die Anschlagposition erreicht. Zur Erfassung der Position des Stückgutes am Anschlagmittel bzw. der Anschlagposition kann zumindest ein Sensor vorgesehen sein, der das Vorhandensein des Stückguts bzw. den Kontakt des Stückguts mit dem Anschlagmittel detektiert. Alternativ oder zusätzlich kann ein Positionssensor vorgesehen sein, der die Positionierung des Stückgutes vor dem Anschlagmittel detektiert, insbesondere ohne einen mechanischen Kontakt zwischen Anschlagmittel und Stückgut detektieren zu müssen. Der zumindest eine Sensor kann mit einer Steuerung des Stetigförderers verbunden sein, so dass die Steuerung das Kippen bzw. Neigen des Stückgutes mittels der Bewegungsvorrichtung automatisch veranlassen kann, sobald das Stückgut in der dafür vorgesehenen Position ist. Dadurch ist es vorteilhafterweise nicht mehr notwendig, dass ein Benutzer das Kippen bzw. Neigen manuell, z.B. per Kopfdruck an einem Bedienelement des Stetigförderers, initiieren muss. Vielmehr erfolgt dies vorteilhafterweise automatisch für jedes Stückgut durch die Steuerung.

Im Zusammenhang mit der Erfindung wird unter einer Rollenbahn eine fördertechnische Einrichtung verstanden, die im Sinne der Fördertechnik ein Fördermittel zum Fördern von Stückgut darstellt. Die Rollenbahn ist demgemäß Teil eines innerbetrieblichen Transportsystems und gehört zur Gattung der Stetigförderer. Die Rollenbahn ist insoweit eine stationäre Anlage und dient vorrangig dem Transport von Waren über eine Anordnung von drehbar gelagerten Rollen. Rollenbahnen können der Sortierung, der Verteilung, Lagerung und insbesondere der Kommissionierung von Stückgütern dienen.

Die Stückgüter können zwar beliebiger Art sein. So können die Stückgüter beispielsweise Pakete, Tablare, Behälter, Paletten, aber auch einzelne Waren oder Werkstücke sein. Besonders zweckmäßig ist die Erfindung jedoch im Zusammenhang mit Transportbehältern, welche entweder oben offen ausgebildet sind oder beispielsweise mittels eines Deckels verschlossen sind, und die eingerichtet sind, ein oder mehrere andere Stückgüter oder Waren aufzunehmen oder zwischenzulagern. Beispielsweise kann das auf der Rollenbahn beförderte Stückgut ein Transportbehälter oder Kommissionierbehälter sein, in dem bestimmtes anderes Stückgut gelagert ist und beispielsweise einer Kommissionierstation zugestellt wird. Bevorzugt kann genau eine Rollenbahn vorgesehen sein, welche das Stückgut zu einer Person an einer Kommissionierstation hin und auch wieder von der Person weg transportiert. Die Zu- und Abförderung kann dabei überdieselbe Fördertechnik erfolgen.

Speziell an einer Ware-zu-Person-Kommissionierstation sollte ein Transportbehälter oder Kommissionierbehälter derart bereitgestellt werden, dass die Person, welche beispielsweise Bestellaufträge im Lager eines Warenhauses bearbeitet, in besonders ergonomischer Weise die bereitgestellten Waren aus dem Kommissionierbehälter entnehmen kann. Hierfür ist es zweckmäßig, die obere Öffnung des Transportbehälters oder des Kommissionierbehälters aus seiner horizontalen Ebene herauszukippen und zwar in Richtung der Person, so dass die Person leichter in den Transportbehälter bzw. den Kommissionierbehälter hineinsehen und/oder hineingreifen kann. Dementsprechend wird das Stückgut um einen Winkel von etwa 10 Grad bis etwa 80 Grad, bevorzugt um einen Winkel von etwa 15 Grad bis etwa 45 Grad, geneigt bzw. gekippt.

Das Gestell bildet eine stationäre Unterkonstruktion, welche als Träger und Lagerung der drehbar gelagerten Rollen dient. Das Gestell kann vorzugsweise ortsfest, d.h. starr mit einem Untergrund verbunden ausgebildet sein. Das Gestell kann jedoch im Rahmen eines umfangreichen Fördersystems gegebenenfalls auch beweglich, d.h. verstellbar, beispielsweise in einer im Wesentlichen horizontalen Ebene schwenkbar oder in einer vertikalen Richtung in unterschiedliche Steigungen einstellbar sein, ist aber nicht innerhalb des Raumes durch den Einsatz von Rollen anstelle von Füßen mobil.

Der Begriff flurgebundener Stetigförderer bedeutet insbesondere, dass sie als flurgebundene Förderer in der Lage sind, das zu transportierende Gut waagerecht, geneigt und senkrecht zu transportieren. Oft benötigen flurgebundene Förderer viel Platz am Boden und haben einen festgelegten Transportweg. Des Weiteren eignen sie sich als Stetigförderer für den Transport großer Materialmengen oder kontinuierlich benötigter Materialien auf festgelegten Strecken, wobei das Be- und Entladen bevorzugt an mehreren Stellen des Transportweges erfolgen kann. Sie sind stetig, d.h. ständig bzw. kontinuierlich, in Bewegung, im Gegensatz zu den Unstetigförderern, die in einzelnen Zyklen das Transportgut bewegen.

Die drehbar gelagerten, nebeneinander beabstandet angeordneten Rollen können entweder aktiv angetrieben ausgebildet sein oder antriebslos d.h. frei drehend ausgebildet sein. Das Stückgut stützt sich während seines Transports auf der Rollenbahn auf den Rollen ab, d.h. das Stückgut steht, je nach seiner Größe, d.h. seiner Grundfläche auf einer Anzahl von Rollen auf. Wenn sich die Rollen drehen, bewegt sich das Stückgut und wird entlang der Förderrichtung auf der Rollenbahn transportiert. Die Stückgüter können sich, beispielsweise bei nicht-angetriebenen Rollen, mittels Schwerkrafteinfluss fortbewegen, insbesondere dann, wenn die Förderebene gegenüber der horizontalen Ebene in Förderrichtung geneigt angeordnet ist. Alternativ oder ergänzend können die Rollen angetrieben ausgebildet sein und dadurch das Stückgut aktiv in Förderrichtung antreiben und so fortbewegen.

Die Förderebene bestimmt sich durch die tragenden Aufstandslinien an den Mantelflächen der Rollen, an denen das Stückgut sich mit seiner Bodenfläche abstützt. Die Förderebene erstreckt sich im Allgemeinen zumeist im Wesentlichen in der horizontalen Ebene, sofern nicht in gewünschter Weise die Förderebene geneigt angeordnet wird, beispielsweise um eine Förderung mittels Schwerkrafteinfluss zuzulassen.

Die Förderrichtung wird bestimmt durch die Ausrichtung der Drehachsen der Rollen und der Drehrichtung der Rollen. Die Förderrichtung verläuft im Allgemeinen entlang eines geraden Pfades, kann jedoch auch entlang eines kurvenförmigen Pfades folgen. Die Förderrichtung liegt außerdem im Allgemeinen in einer zumindest im Wesentlichen horizontalen Ebene, kann jedoch auch in einer geneigten Ebene liegen. Die Förderrichtung bestimmt in welche Richtung die transportierten Stückgüter bewegt werden. Die Förderrichtung verläuft quer zur Drehachse der Rollen.

Das Anschlagmittel kann vorzugsweise im Bereich eines Endstreckenabschnitts, d.h. am Ende einer Rollenbahnstrecke liegen. Die Rollenbahn kann beispielsweise an eine lokale Kommissionierstation führen, wobei die Rollenbahn an der Kommissionierstation endet. Eine solche Rollenbahn dient im Allgemeinen dazu, die in einem Transportbehälter vorgehaltenen Waren, insbesondere einer speziellen Warenart oder Warengruppe, die aus einem Lagerbereich durch die Rollenbahn herantransportiert sind, an die Kommissionierstation heranzuführen. Der jeweils herangeführte Transportbehälter bildet demgemäß einen Quellbehälter aus dem beispielsweise eine Person, welche beispielsweise Bestellaufträge im Lager eines Warenhauses bearbeitet, eine bestimmte Anzahl der bereitgestellten Waren entnimmt und beispielsweise einem Zielbehälter übergibt, in dem die gemischten Waren gemäß dem Bestellauftrag zusammengestellt werden.

Das Anschlagmittel muss jedoch nicht notwendiger Weise im Bereich eines Endstreckenabschnitts, d.h. am Ende einer Rollenbahnstrecke liegen. Vielmehr kann das Anschlagmittel auch in einem beliebigen, insbesondere mittleren Streckenabschnitt der Rollenbahnstrecke liegen, wenn das jeweilige logistische Konzept es erfordert.

Das Anschlagmittel kann in einer speziellen Ausführungsvariant abgesenkt werden, so dass das Anschlagmittel nicht mehr über die Förderebene nach oben vorsteht, sondern verborgen gelagert ist. In einer solchen Anordnung können die Stückgüter über das Anschlagmittel ungehindert hinwegrollen, ohne angehalten werden. Eine solche Ausführungsvariante ist besonders dann zweckmäßig, wenn das Anschlagmittel nicht im Bereich eines Endstreckenabschnitts, d.h. am Ende einer Rollenbahnstrecke liegt, sondern in einem beliebigen anderen, insbesondere mittleren Streckenabschnitt der Rollenbahnstrecke liegt.

Unabhängig davon, ob das Anschlagmittel im Bereich eines Endstreckenabschnitts, d.h. am Ende einer Rollenbahnstrecke liegt oder in einem beliebigen anderen, insbesondere mittleren Streckenabschnitt der Rollenbahnstrecke liegt, kann das Stückgut, insbesondere der Transportbehälter mittels der Kippvorrichtung eine Lageänderung um eine Kippachse erfahren, die zumindest im Wesentlichen quer oder rechtwinklig zu seiner Förderrichtung liegt.

Alternativ kann ebenso unabhängig davon, ob das Anschlagmittel im Bereich eines Endstreckenabschnitts, d.h. am Ende einer Rollenbahnstrecke liegt oder in einem beliebigen anderen, insbesondere mittleren Streckenabschnitt der Rollenbahnstrecke liegt, das Stückgut, insbesondere der Transportbehälter mittels der Kippvorrichtung eine Lageränderung um eine Kippachse erfahren, die zumindest im Wesentlichen längs oder parallel zu seiner Förderrichtung liegt. In dieser Ausführungsalternative wird der das Stückgut, insbesondere der Transportbehälter also seitlich von der Rollenbahn weg geneigt.

Die vorbestimmte Position, an welcher das Stückgut, insbesondere der Transportbehälter, durch das Anschlagmittel angehalten und mittels der Kippvorrichtung dort abgekippt wird, kann also im Bereich eines Endstreckenabschnitts, d.h. am Ende einer Rollenbahnstrecke liegen oder in einem beliebigen anderen, insbesondere mittleren Streckenabschnitt der Rollenbahnstrecke liegen.

Die Kippvorrichtung ist ausgebildet, das Stückgut, insbesondere den Transportbehälter, an einer Seite anzuheben und zwar unter Beibehaltung der Position und Lage der Lastaufnahmemittel, beispielsweise Rollen der Rollenbahn. Die Kippvorrichtung ist ausgebildet, das Stückgut, insbesondere den Transportbehälter aus der Ebene der beispielsweisen Rollen der Rollenbahn kippend herauszuheben. Die Rollen der Rollenbahn bleiben während der Kippbewegung in ihren bisherigen Lagen unverändert. Die Förderebene bestimmt sich insoweit durch die unveränderten Lagen der Lastaufnahmemittel, beispielsweisen den Rollen der Rollenbahn.

Mittels der Kippvorrichtung wird das Stückgut, insbesondere der Transportbehälter aus einer auf der Förderebene stehende Ausgangslage in eine von der Ausgangslage abweichende Endlage gekippt bzw. geschwenkt oder geneigt. Die Ausgangslage stimmt insoweit mit der Förderebene des Stetigförderers überein. In der Endlage ist das Stückgut aus der Förderebene des Stetigförderers herausgekippt. Unter einem Kippen bzw. einem Herauskippen wird jegliche Art der Lageänderung des Stückgutes verstanden, die eine Rotation des Stückgutes um eine zumindest im Wesentlichen horizontal verlaufende Rotationsachse ist. Vorzugsweise handelt es sich in speziellen Ausführungen um ein Schwenken des Stückgutes um eine in Förderrichtung des Stetigförderers (X-Achse) verlaufende Rotationsachse oder um ein Schwenken des Stückgutes um eine quer, d.h. rechtwinkelig zur Förderrichtung des Stetigförderers verlaufende, im Wesentlichen in der Förderebene liegende Rotationsachse (Y-Achse). Die Rotationsachse kann auch unterhalb der Förderebene liegen. Die Rotationsachse kann insbesondere während des Schwenkens wandern. Unter einem Kippen bzw. einem Herauskippen wird erfindungsgemäß keine Rotation des Stückgutes um eine vertikale Rotationsachse verstanden. Das Kippen bzw. das Herauskippen kann ein Neigen sein, das wahlweise durch ein Anheben oder Absenken einer, insbesondere unteren, Kante des Stückgutes erfolgen kann. Dabei kann eine dieser unteren Kante gegenüberliegende weitere Unterkante auch in der Gegenrichtung angehoben oder abgesenkt werden. Die untere Kante und die weitere Unterkante können die zwei gegenüberliegende Vorderkante und Hinterkante des Stückgutes sein, oder die jeweilige untere, rechte Seitenkante und die untere, linke Seitenkante.

Das jeweilige Stückgut, das auch als Fördergut bezeichnet wird, kann beispielsweise ein Behälter sein, wahlweise mit Inhalt oder ohne Inhalt, ein Kommissionierbehälter (Quellbehälter, Zielbehälter), ein Kleinteileladungsträger (KLT), ein Kolli, ein Tablar, eine Werkstückträger, eine Kartonage, ein Tray, wie beispielsweise ein Pappträger, ein Gebinde, formstabile und biegesteife Tütenwaren und/oder sonstige förderfähige Stückgüter, wie beispielsweise Lebensmittel.

In der Ausgangslage steht das Stückgut mit seinem Boden auf dem Lastaufnahmemittel, insbesondere auf einer der Größe der Bodenfläche des Stückgutes entsprechenden Anzahl von Rollen auf, d.h. das Stückgut steht beispielsweise auf mehreren Rollen auf. In der Endlage ist das Stückgut mittels der Kippvorrichtung zumindest von mehreren Rollen abgehoben, ohne dass die Rollen und/oder das Gestell seine Position und Lage verändern. In der Endlage stützt sich das Stückgut beispielsweise lediglich an einer einzigen Rolle und dem Anschlagmittel ab. Je nach eingestellter Höhenlage einer Kontakteinrichtung der Kippvorrichtung kann das Stückgut in einen entsprechend variierten Kippwinkel gebracht werden. Mittels der Kippvorrichtung kann das Stückgut somit geneigt werden, ohne dass dazu bspw. die Rollen und/oder das Gestell des Stetigförderers in ihren jeweiligen Positionen und/oder Lagen verändert werden müssten. Die Kontakteinrichtung kann beispielsweise von einer starren Stange oder einer drehbaren Rolle gebildet werden, welche das Stückgut am Boden kontaktiert, um das Kippen des Stückgutes durchzuführen.

Aufgrund der erfindungsgemäßen Ausbildung der Bewegungsvorrichtung, insbesondere der Kippvorrichtung wird das Stückgut, insbesondere der Transportbehälter insoweit auch nicht aus der Rollenbahn ausgeschleust, sondern verbleibt oberhalb der Förderebene der Rollenbahn. Anschließend kann das Stückgut, insbesondere der Transportbehälter mittels der erfindungsgemäßen Bewegungsvorrichtung bzw. Kippvorrichtung wieder auf einfache Weise auf die Förderebene der Rollenbahn zurückbewegt bzw. zurückgekippt und mittels des Lastaufnahmemittels, insbesondere der Rollenbahn weitertransportiert oder zurücktransportiert werden.

Die Bewegungsvorrichtung ist erfindungsgemäß eine Kippvorrichtung, die ortsfest bezüglich des Gestells der Rollenbahn angeordnet ist und eine verstellbare Kontakteinrichtung aufweist, die ausgebildet ist zum Kippen des an dem Anschlagmittel anstehenden Stückgutes aus seiner Ausgangslage in seine Endlage, wobei die Kontakteinrichtung dazu aus einer Verwahrungsposition in eine Betätigungsposition relativ zum Lastaufnahmemittel verstellbar bezüglich des Gestells gelagert ist. Die Verwahrposition kann sich dadurch auszeichnen, dass die Kontakteinrichtung nicht mit der vom Lastaufnahmemittel aufgenommenen Last mechanisch kontaktieren kann bzw. kontaktiert. Das Kontaktieren, insbesondere ein unmittelbarer Kontakt, von Last und Kontakteinrichtung erfolgt bevorzugt erst bei der Überführung der Kontakteinrichtung von der Verwahrungsposition in die Betätigungsposition. In der Betätigungsposition ist ein, insbesondere unmittelbarer, mechanischer Kontakt zwischen der Last und der Kontakteinrichtung hergestellt. Dies bedeutet, dass die Elemente des Lastaufnahmemittels, welche die Last unterstützen, während sich die Kontakteinrichtung in der Verwahrungsposition befindet, vorzugsweise verschieden sind von den Elementen der Kontakteinrichtung.

Die Kippvorrichtung kann also eine mit der Rollenbahn verbundene Handhabungsvorrichtung sein, welche ausgebildet ist, das Stückgut von seiner Ausgangslage auf der Förderebene der Rollenbahn in seine Endlage abzukippen. Die verstellbare Kontakteinrichtung der Kippvorrichtung bildet insoweit einen Endeffektor, welcher Kontakt mit dem Stückgut aufnimmt, um das Stückgut umzuorientieren. Die Kontakteinrichtung kann beispielsweise von unten an einem Boden des Stückgutes hebend angreifen. Alternativ kann die Kontakteinrichtung beispielsweise kraftschlüssig oder formschlüssig an einer lateralen Seitenwand des Stückgutes angreifen und das Stückgut in die entsprechend gewünschte Lager bringen, d.h. schwenken.

Die Kontakteinrichtung ist aus einer Verwahrungsposition in eine Betätigungsposition verstellbar bezüglich des Gestells gelagert. Die Kippvorrichtung kann demgemäß einen Antrieb bzw. einen Motor aufweisen, welcher die Kontakteinrichtung relativ zum Gestell und somit relativ zur Förderebene bewegt und verstellt.

Die Kippvorrichtung kann ausgebildet sein das an dem Anschlagmittel anstehende Stückgut um eine zumindest im Wesentlichen quer zur Förderrichtung, insbesondere längs zu den Drehachsen der Rollen ausgerichtete Kippachse zu kippen.

Der von dem Anschlagmittel abgewandte Bodenabschnitt des Stückgutes kann insbesondere von derjenigen Bodenhälfte gebildet werden, die bezüglich des Massenschwerpunkts des Stückgutes so weit von der Seite des Anschlagmittels entfernt liegt, so dass bei einem Anheben des Stückgutes durch die Kontakteinrichtung das angehobene Stückgut nach vorne in Richtung des Anschlagmittels kippt und nicht in die entgegengesetzte Richtung.

Der Boden des Stückgutes kann insoweit eingeteilt werden in den soeben beschriebenen von dem Anschlagmittel abgewandten Bodenabschnitt und einem dem Anschlagmittel zugewandten Bodenabschnitt. Der abgewandte Bodenabschnitt und der zugewandte Bodenabschnitt können sich insoweit zu der gesamten Bodenfläche des Stückgutes ergänzen.

Die Kippvorrichtung kann alternativ ausgebildet sein das an dem Anschlagmittel anstehende Stückgut um eine zumindest im Wesentlichen längs zur Förderrichtung, insbesondere quer zu den Drehachsen der Rollen ausgerichtete Kippachse zu kippen.

Die Kippvorrichtung kann in einer alternativen Ausführung wenigstens eine am Gestell höhenverstellbar gelagerte Kontakteinrichtung aufweisen, die ausgebildet ist, einen dem Anschlagmittel zugewandten Bodenabschnitt des Stückgutes zumindest abschnittsweise abzusenken, um das Stückgut in seine Endlage abzukippen.

Die Kippvorrichtung kann wenigstens einen am Gestell schwenkbar gelagertes Schwenkmittel, wie beispielsweise einen Schwenkarm aufweisen, der an seinem distalen Schwenkmittelende, insbesondere einem Schwenkarmende des Schwenkarms die Kontakteinrichtung aufweist. Das distale Schwenkmittelende kann formschlüssig und/oder kraftschlüssig an dem abzukippenden bzw. zu schwenkenden Stückgut angreifen.

Der wenigstens eine, am Gestell schwenkbar gelagerte Schwenkarm kann an seinem distalen Schwenkarmende die Kontakteinrichtung aufweisen. Die Kontakteinrichtung kann in einer solchen Ausführungsform beispielsweise in Form eines in Richtung dem Stückgut seitlich vorspringen Zapfen aufweisen. Während der Kippbewegung greift der seitlich vorspringende Zapfen, insbesondere zwei an gegenüberliegenden lateralen Seiten an das Stückgut angreifenden Zapfen in einen oder mehrere korrespondierende Aufnahmen, die mit dem Stückgut bzw. dem Transportbehälter, verbunden sind, formschlüssig ein. Die Aufnahmen am Stückgut können beispielsweise einteilig mit den lateralen Seitenwänden des Stückgutes, d.h. des Transportbehälters ausgebildet sein.

Der Zapfen der Kontakteinrichtung kann insoweit ein Halteglied bilden, das ausgebildet ist, während des Kippens des Stückgutes mit einer als Rücksprung ausgebildeten Aufnahmen jeweils an einer lateralen Seitenwand des Stückgutes formschlüssig zusammenzuwirken.

Demgemäß kann die Kontakteinrichtung ein Halteglied aufweisen, das ausgebildet ist, während des Kippens des Stückgutes mit einem Vorsprung oder einem Rücksprung an einer lateralen Seitenwand des Stückgutes formschlüssig zusammenzuwirken.

Im Falle einer ersten Ausführungsform kann der Antrieb bzw. Motor von einem Trommelmotor bzw. einer angetriebenen Rolle bzw. Antriebsrolle gebildet werden. Dies ermöglicht die Verwendung von Standardkomponenten aus dem Bereich der Fördertechnik. Demgemäß können Trommelmotoren, die auch als angetriebene Rollen bspw. in fördertechnischen Rollenbahnen verwendet werden, als Motor zum Betätigen der Kippvorrichtung eingesetzt werden. Im Falle von angetriebenen Rollen ist die Achse des Trommelmotors bezüglich des Gestells festgelegt und die Mantelwand des Trommelmotors, welche die Rolle bildet, dreht sich. Mit der Mantelfläche des Trommelmotors können verschiedene Arten von Ritzel für Zugmitteltriebe fixiert und ebenfalls, identisch zur Mantelfläche, angetrieben werden. Das Kontaktmittel ist mit dem Zugmittel verbunden und wird somit ebenfalls vom Trommelmotor angetrieben. Durch die Nutzung des Zugmittels wird die rotatorische Bewegung des Trommelmotors in eine im Wesentlichen lineare Bewegung des Kontaktmittels gewandelt.

Im Falle einer alternativen zweiten Ausführungsform kann der Antrieb durch einen Motor mit Vorgelege gebildet werden. Dieser Motor kann auch ein Trommelmotor sein. In dieser Ausführung kann eine zusätzliche Übersetzungsstufe realisiert werden, dadurch dass des Vorgelegemotors beispielsweise ein separates Antriebsritzel aufweist, welches über ein zweites Zugmittel einen Abtrieb antreibt, der das erste Zugmittel antreibt. Statt eines Antriebsritzels mit Zähnen kann beispielsweise auch eine Riemenscheibe vorgesehen sein.

Generell können das erste Zugmittel und/oder das zweite Zugmittel wahlweise beispielsweise als eine Kette, ein Zahnriemen, Keilriemen oder Flachriemen ausgebildet sein. Entsprechend wären Antriebsritzel und sonstigen Zahnräder durch passende Riemenscheiben zu ersetzen.

Die Kontakteinrichtung kann von einer drehbar gelagerten Kontaktrolle gebildet werden, die in ihrer Verwahrungsposition zwischen zwei benachbarten Rollen der Rollenbahn unter der Förderebene der Rollen oder in der Förderebene der Rollen positioniert ist. In einer alternativen Ausführungsform kann die drehbare Kontaktrolle durch eine feste Stange, insbesondere eine Kreiszylinderstange ersetzt sein. Die feste Stange kann beispielsweise mit einem reibungsreduzierenden Gleitmaterial ausgestattet, insbesondere beschichtet sein. Auch wenn es vorteilhaft sein kann, wenn während eines Kippvorgangs der Boden des Stückgutes auf einer drehbar gelagerten Kontaktrolle abwälzen kann, so kann auch, je nach Oberflächenbeschaffenheit des Bodens des Stückgutes und/oder der Manteloberfläche einer festen Stange, insbesondere einer Kreiszylinderstange, ein Gleiten des Bodens des Stückgutes auf der Manteloberfläche der feststehenden, d.h. nicht rotierenden Stange, insbesondere der Kreiszylinderstange ausreichend und zweckmäßig sein.

Die Kippvorrichtung kann wenigstens eine am Gestell höhenverstellbar gelagerte, insbesondere durch das Zugmittel verstellbare Kontakteinrichtung aufweisen, die ausgebildet ist, einen von dem Anschlagmittel abgewandten Bodenabschnitt des Stückgutes von unten anzuheben, um das Stückgut in seine Endlage abzukippen, insbesondere mittels eines linksseitigen Bewegungsmittel und eines rechtsseitigen Bewegungsmittels, wobei das linksseitige Bewegungsmittel und das rechtsseitige Bewegungsmittel unterhalb der Förderebene miteinander gekoppelt sind. Das linksseitige Bewegungsmittel ist auf der einen lateralen Seite des Stückgutes angeordnet und das rechtsseitige Bewegungsmittel ist an einer dem linken Bewegungsmittel gegenüberliegenden lateralen Seite des Stückgutes angeordnet. Insbesondere umgreifen das linksseitige Bewegungsmittel und das rechtsseitige Bewegungsmittel das Stückgut nicht von oben.

Die Kontakteinrichtung ist erfindungsgemäß an einem Zugmittel der Kippvorrichtung umlaufend oder reversierend höhenverstellbar gelagert, wobei das Zugmittel an dem Gestell gelagert und durch einen (Trommel-)Motor angetrieben ist. Generell können die Zugmittel wahlweise beispielsweise als eine Kette, ein Zahnriemen, Keilriemen, Flachriemen oder Seil ausgebildet sein.

Das Zugmittel trägt die Kontakteinrichtung, beispielsweise an zwei gegenüberliegenden Endabschnitten der Kontakteinrichtung. Die Kontakteinrichtung kann eine drehbare oder feste Rolle, eine Stange oder zumindest eine stegartige Kante sein. Indem das wenigstens eine Zugmittel fortlaufend oder reversierend umläuft, wird die Kontakteinrichtung angehoben oder abgesenkt. Um automatisch feststellen zu können, wann sich die Kontakteinrichtung in der Verwahrungsposition oder in der Betätigungsposition befindet, können wahlweise Anschläge vorgesehen sein, welche die Kontakteinrichtung in der jeweiligen Verwahrungsposition oder Betätigungsposition mechanisch oder elektronisch stoppen, oder es können Sensoren vorgesehen sein, welche die momentane (Höhen-)Position der Kontakteinrichtung erfassen können. Dabei kann eine Steuervorrichtung mit den Sensoren verbunden sein, welche Steuervorrichtung in Abhängigkeit der von den Sensoren erfassten Position der Kontakteinrichtung die Antriebsvorrichtung der Kippvorrichtung ansteuern, um die Kontakteinrichtung automatisch in die momentan gewünschte Position (Verwahrungsposition oder Betätigungsposition) zu bringen.

Im Falle einer reversierenden Ausführung des Zugmittels können insbesondere mechanische, elektro-mechanische oder elektronische Anschläge vorgesehen sein, welche die Kontakteinrichtung in Abhängigkeit der Drehrichtung des Zugmittels entweder an einem der Verwahrungsposition zugeordneten unteren Anschlag anschlagen lässt oder an einem der Betätigungsposition zugeordneten oberen Anschlag anschlagen lässt.

Die Kippvorrichtung kann wenigstens eine am Gestell höhenverstellbar gelagerte, insbesondere durch das Zugmittel verstellbare Kontakteinrichtung aufweisen, die ausgebildet ist, einen dem Anschlagmittel zugewandten Bodenabschnitt des Stückgutes abzusenken, um das Stückgut in seine Endlage zu bringen bzw. abzukippen.

Die Kontakteinrichtung kann von einer festen Stange, insbesondere Kreiszylinderstange oder einer drehbar gelagerten Kontaktrolle gebildet werden, die in ihrer Verwahrungsposition, insbesondere zwischen zwei benachbarten Rollen der Rollenbahn, unter der Förderebene oder in der Förderebene positioniert ist.

Die Kontakteinrichtung kann von einer Tragplatte gebildet werden, die wenigstens einen Ausschnitt für eine der Rollen der Rollenbahn aufweist, wobei die Tragplatte ausgebildet ist, von unten einen Bodenabschnitt des Stückgutes tragend anzuheben und zu schwenken, um das Stückgut in seine Endlage zu bringen bzw. abzukippen.

Die Tragplatte kann insoweit derart ausgebildet sein, dass das Stückgut, insbesondere der Transportbehälter, nicht lediglich stellenweise oder punktuell gegriffen, sondern flächig an seinem Boden aufgehoben und entlang dem gewünschten Pfad für das Kippen bewegt wird. In einer solchen Ausführungsvariante muss das Stückgut, insbesondere der Transportbehälter, nicht notwendiger Weise um eine feststehende Kippachse gedreht werden, sondern kann eine davon abweichende, andere Kippbewegung entlang eines beliebigen Bewegungspfades ausführen.

Die Tragplatte kann Ausschnitte aufweisen, so dass jeder Ausschnitt von einer einzelnen Rolle durchdrungen werden kann, so dass in der Verwahrungsposition der Tragplatte das Stückgut ausschließlich auf den Rollen aufsteht und nicht mehr mit der Tragplatte als solches in Kontakt ist. Demgemäß kann das Stückgut, insbesondere der Transportbehälter, wenn die Tragplatte sich in ihrer Verwahrungsstellung befindet, ungehindert über die Tragplatte hinweg in Förderrichtung bewegt werden, wenn das Anschlagmittel ebenfalls aus der Förderrichtung entfernt ist.

Der flurgebundene Stetigförderer kann demgemäß als wenigstens ein Rollenförderer ausgebildet sein und eine Vielzahl von an dem Gestell drehbar gelagerte, nebeneinander beabstandet angeordnete Rollen als Lastaufnahmemittel aufweisen, welche die Förderebene für die Stückgüter bilden, deren Förderrichtung zumindest im Wesentlichen quer zur Drehachse der Rollen verläuft, wobei das Anschlagmittel ausgebildet ist, ein auf der Förderebene in Förderrichtung transportiertes Stückgut an einer vorbestimmten Position auf den Rollen zu halten, und die Kippvorrichtung ausgebildet ist, das an dem Anschlagmittel auf der Förderebene anstehende Stückgut aus seiner auf der Förderebene stehende Ausgangslage in eine von der Ausgangslage abweichende Endlage aus der Förderebene des Lastaufnahmemittels herauszukippen.

Die Kippvorrichtung kann dabei ortsfest bezüglich des Gestells des Rollenförderers angeordnet sein und die Kontakteinrichtung kann aus einer Verwahrungsposition in eine Betätigungsposition relativ zu den Rollen des Rollenförderers verstellbar bezüglich des Gestells beweglich gelagert sein.

Die Kippvorrichtung kann auch hierbei so ausgebildet sein, das an dem Anschlagmittel anstehende Stückgut um eine zumindest im Wesentlichen längs oder quer zu den Drehachsen der Rollen ausgerichtete Kippachse zu kippen.

Die Kontakteinrichtung kann von einer Tragplatte gebildet werden, die wenigstens einen randgeschlossenen oder randoffenen Ausschnitt für eine der Rollen der Rollenbahn aufweist, wobei die Tragplatte ausgebildet ist, von unten einen Bodenabschnitt des Stückgutes tragend anzuheben und zu schwenken, um das Stückgut in seine Endlage abzukippen.

Die Erfindung ist, teilweise mit anderen Worten, im Folgenden nochmals zusammengefasst dargestellt.

Die Zuförderung des Fördergutes erfolgt über eine im Wesentlichen horizontal verlaufende stationäre Fördervorrichtung bis in eine Zielposition, beispielsweise in den Bereich der Kommissionierung. Diese Förderung erfolgt nach dem Prinzip Ware zur Person .

Zur insbesondere ergonomischen Bereitstellung des Fördergutes, beispielsweise eines Transportbehälters, ist eine Anpassung der Lage, d.h. der Orientierung des Fördergutes erforderlich. Dazu wird die Hinterkante des Fördergutes, d.h. an einer dem Kommissionierbereich abgewandten Seite, mithilfe eines Endeffektors, der mittels einer Hubvorrichtung bewegt wird, um einen im Wesentlichen vertikalen Anteil angehoben d.h. das Fördergut wird geneigt, wobei sich der Drehpunkt bzw. die Drehachse des Fördergutes vorzugsweise an seiner Unterkante und in einem Abstand, maximal halbe Fördergutlänge, von seiner Vorderkante, d.h. dem Kommissionierbereich zugewandte Seite, befindet. Dabei vollzieht die vordere Oberkante des Fördergutes eine Änderung ihrer Position, und zwar zum Kommissionierbereich hin und abwärts, in deren Folge der Zugriff auf das Fördergut erleichtert und die Ergonomie des Kommissioniervorgangs erhöht wird.

Die Hubvorrichtung besteht in einer beispielhaften Ausführungsform im Wesentlichen aus zwei mechanisch miteinander gekoppelten Zugmitteltrieben, die entweder direkt über einen gemeinsamen Antrieb oder über ein separates Vorgelege angetrieben werden können. Der wenigstens eine Zugmitteltrieb oder die beiden Zugmitteltriebe bewegen einen Endeffektor, der ausgebildet ist, die Lage des Förderguts zu verändern, insbesondere das Fördergut zu neigen bzw. abzukippen. Der für den Hub erforderliche wenigstens eine Zugmitteltrieb kann ein Antriebsrad, ein Umlenkrad, das Zugmittel selbst und einen Endeffektor oder einem anderen Teil zur Aufnahme dessen, aufweisen. Der Endeffektor kann im Trum des Zugmittels fixiert sein, beispielsweise mittels einem Spannelement. Bei der erstgenannten Variante kann die Leistungseinleitung und Kopplung beider Triebe durch einen zentralen Trommelmotor erfolgen, der beidseitig mit Antriebsrädern ausgestattet ist. Bei der zweitgenannten Variante kann die mechanische Kopplung der beiden Triebe nach demselben Prinzip erfolgen, allerdings wird hier eine nicht angetriebene Rolle genutzt. Diese ist zusätzlich mit einem weiteren Rad ausgestattet, welches über ein Vorgelege von einem Antriebsmotor angetrieben wird.

Infolgedessen kann der Endeffektor eine im Wesentlichen vertikale translatorische (Hub-)Bewegung vollziehen und insbesondere stufenlos positioniert werden. Zur Aufnahme von quer zur Bewegungsrichtung des Zugmittels wirkenden Kräften, wird der Endeffektor geführt gelagert. Eine Hub- und/oder Senkbewegung des Endeffektors kann entweder durch einen vollständigen Umlauf des Zugmittels bei gleichbleibender Bewegungsrichtung/Drehrichtung oder durch eine Richtungsumkehr mit abwechselnd umgekehrter Bewegungsrichtung erfolgen. Ist Letzteres der Fall, so können die Endlagen des Endeffektors mithilfe von mechanischen Anschlägen derart gewählt werden, dass eine mechanische Selbstarretierung des Endeffektors gewährleistet ist. Ohne Endanschläge ist das zur Arretierung erforderliche Moment über den gesamten Nutzungszeitraum durch den Antrieb oder eine zusätzliche Haltebremse am Antrieb zu erzeugen.

Der Endeffektor stellt in einer besonders vorteilhaften Ausführung in seiner unteren Endlage einen Teil der Förderebene dar, über welche die Fördergüter bewegt, d.h. transportiert und bereitgestellt werden können. Der Endeffektor ist in einem solchen Fall laufend in Kontakt mit dem Fördergut.

Nach Beendigung des Kommissioniervorgangs kann das Fördergut wieder in seine horizontale Ausrichtung abgesenkt und über dieselbe Fördervorrichtung abgeführt werden, über die es zugeführt wurde.

Durch die erfindungsgemäße fördertechnische Rollenbahn kann eine aktive Lageänderung eines Fördergutes auf einem Förderelement erreicht werden.

Die erfindungsgemäße fördertechnische Rollenbahn kann der Bereitstellung des Fördergutes in definierter Lage auf einem Förderelement dienen.

Die Erfindung kann demgemäß eine ergonomische Bereitstellung von Fördergütern zur Kommissionierung gewährleisten. Eine kostengünstige Ausführung kann durch Verwendung von Standardkomponenten erreicht werden. Insoweit ist nur ein sehr geringer projektspezifischer Anpassungsaufwand nötig.

Es kann, je nach Ausführung, eine gewisse Steigerung der Bauraumausnutzung erreicht werden, da lediglich das Fördergut selbst eine Lageänderung erfährt und nicht die tragende Rollenbahn selbst verstellt, d.h. geschwenkt oder geneigt werden muss, wodurch gegebenenfalls der erforderliche Vertikalabstand zwischen übereinander angeordneten Förderebenen reduziert werden kann.

Die äußere Gestalt der Vorrichtung kann deckenseitig geöffnet sein, sodass die Höhe des Fördergutes dadurch nicht beschränkt wird und folglich auch Kollisionen mit der umgebenden Infrastruktur vermieden werden können.

Die erfindungsgemäße Vorrichtung dient somit zur aktiven Lageänderung eines Fördergutes auf einer im Wesentlichen horizontal verlaufenden stationären Fördervorrichtung. Eine Lageänderung des Fördergutes durch kann entweder durch Anheben seiner Hinterkante (im Wesentlichen vertikal) und/oder durch Ablassen seiner Vorderkante (im Wesentlichen vertikal) erfolgen.

Eine vorteilhafte Antriebseinheit kann beispielsweise als Zugmitteltrieb direkt angetrieben, d.h. ohne Vorgelege, als Zugmitteltrieb über ein Vorgelege angetrieben, oder als angetriebener Seilzug ausgeführt werden. Vorteilhaft kann eine stufenlose Ausführung zur individuellen Lageänderung, infolge Hubhöhenänderung sein. Es ist auch eine Ausführung mit zwei Endlagen möglich.

Vorzugsweise erfolgt eine Verlagerung der Kippachse des Stückgutes während einer Verlagerung des Stückgutes von der Ausgangslage in die Endlage. Dies kann bevorzugt dadurch erfolgen, dass der Angriffspunkt zwischen Kontakteinrichtung und Stückgut, an welchem der mechanische Kontakt zwischen Kontakteinrichtung und Stückgut stattfindet, während des Verlagerns variabel ist. Beispielsweise kann, insbesondere für den Fall, dass die Kontakteinrichtung als Rolle ausgebildet ist, die Kontakteinrichtung relativ zum unterstützten Boden des Stückgutes abrollen bzw. verrutschen. Dies kann durch die Bewegung der Kontakteinrichtung relativ zum Gestell des Lastaufnahmemittels bedingt sein. Des Weiteren kann sich das Stückgut aufgrund der Schwerkraft bedingt durch das Heben und Kippen der Schwerkraft folgend verlagern. Besonders bevorzugt wird es dem Stückgut während des Kippens ermöglicht, sich mit seiner dem Anschlagmittel proximalen Seite in einen Leerraum bzw. eine Lücke zu verlagern, welche sich insbesondere zwischen dem Anschlagmittel und Lastaufnahmemittel erstreckt.

Der Leerraum bzw. die Lücke kann statisch, also unabhängig von der Anwesenheit des Stückgutes, vorhanden sein oder transient vorhanden sein, das heißt nur zeitlich begrenzt, beispielsweise nur während des Kippens, insbesondere durch Aktuieren eines oder mehrerer Elemente(s) des Lastaufnahmemittels. Im Falle eines statischen Leerraums wird das Stückgut innerhalb der Förderebene zwischen Anschlagmittels und Lastaufnahmemittel bereichsweise nicht unterstützt. Bei einem Kippen mittels der Bewegungsvorrichtung bzw. Kippvorrichtung fällt das Stückgut durch Kippen und/oder Rutschen in den Leerraum bzw. die Lücke und das Stückgut kann dann unterhalb der Förderebene am Boden und/oder an einer Seitenwand gestützt werden. Im Falle eines transienten Leerraums wird das Stückgut zwischen Anschlagmittels und Lastaufnahmemittel in der Ausgangslage innerhalb der Förderebene bereichsweise unterstützt, beispielsweise durch eine oder mehrere Rollen und/oder eine Platte und/oder einen Gurt als bevorzugte Lastaufnahmemittel. Vor oder während des Kippens kann die Unterstützung des Stückgutes unter die Förderebene verlagert werden, beispielsweise durch ein zumindest bereichsweises Verlagern des Lastaufnahmemittels, insbesondere der zumindest einen Rolle, und/oder der Platte und/oder des Gurtes, nach unten oder zur Seite, so dass der Leerraum entsteht, in welchen sich das Stückgut hinein verlagern kann. Dieses Verlagern des Lastaufnahmemittels, insbesondere der zumindest einen Rolle, und/oder der Platte und/oder des Gurtes kann aktiv oder passiv erfolgen. Bei einer aktiven Verlagerung ist ein Antrieb vorgesehen, der eine Verlagerung ermöglicht, so dass vorteilhafterweise ein Leerraum zu einer vorbestimmten Zeit vorbestimmt werden kann. Bevorzugt kann der Antrieb der Kontakteinrichtung auch als Antrieb für die aktive Verlagerung dienen. Bei einer passiven Verlagerung ist kein Antrieb vorgesehen, was vorteilhafterweise einen einfacheren Aufbau des Stetigförderers ermöglicht. Beispielsweise können eine oder mehrere Rollen und/oder Platte(n) und/oder Gurt(e) federnd gelagert sein. Während des Kippens des Stückgutes kann bzw. können die Rollen nach unten bzw. unterhalb der Förderebene verlagert bzw. gedrückt werden, insbesondere durch das Eigengewicht des Stückgutes. Vorteilhafterweise wird der Leerraum durch das Kippen des Stückgutes selbst geschaffen.

Der Leerraum bzw. die Lücke kann dabei ausgelegt sein, in etwa 10% bis etwa 40%, bevorzugt etwa 20% bis etwa 30% der Erstreckung des Stückgutes in Förderrichtung zu entsprechen. Der Leerraum bzw. die Lücke kann dabei etwa 10cm bis etwa 40cm, bevorzugt etwa 15cm bis etwa 30cm in Förderrichtung lang sein. Dadurch kann sich der Schwerpunkt des Stückgutes nach unten verlagern, so dass der Schwerpunkt weniger hoch angehoben werden kann, als es durch das Kippen mittels der Kontakteinrichtung der Fall sein würde. Bevorzugt verbleibt der Schwerpunkt in der Endlage im Wesentlichen auf der Höhe des Schwerpunktes in der Ausgangslage. Besonders bevorzugt ist der Schwerpunkt des Stückgutes in der Endlage jedoch unterhalb des Schwerpunktes in der Ausgangslage.

Vorteilhafterweise wird durch eine Kombination des Kippens durch die Kippvorrichtung und des Absenkens des Stückgutes in einen Leerraum zwischen Anschlagmittel und Lastaufnahmemittel erreicht, dass sich die Öffnung einem Benutzer entgegen neigt und somit der Benutzer einen verbesserten Zugriff auf das Stückgut hat und des Weiteren der notwendige Raum in der vertikalen reduziert wird.

Ein Aspekt betrifft ein System aufweisend:
zumindest einen ersten erfindungsgemäßen flurgebundenen Stetigförderer und
zumindest einen zweiten flurgebundenen Stetigförderer, bevorzugt gemäß der Erfindung, welcher zumindest bereichsweise unterhalb des ersten Stetigförderers angeordnet ist.

Durch die vorteilhafte Anordnung von zwei vertikal übereinander angeordneten (erfindungsgemäßen) Stetigförderern wird ein Zugriff des Benutzers auf zwei angediente Stückgüter gleichzeitig ermöglicht.

Die Zu- und Abförderung kann bei dem ersten und/oder zweiten Stetigförderer über dieselbe Fördertechnik erfolgen. Es findet insbesondere keine (automatische) Förderung eines Stückgutes vom ersten zum zweiten (oder umgekehrt) Stetigförderer statt. Der zweite Stetigförderer kann insbesondere im Wesentlichen horizontal ausgerichtet sein und insbesondere einen Rollenförderer aufweisen.

Bevorzugt steht der zweite Stetigförderer zum Benutzer hin gegenüber dem ersten Stetigförderer vor, bevorzugt um mehr als etwa 5cm, besonders bevorzugt um mehr als etwa 10cm und insbesondere um mehr als etwa 15cm. Vorteilhafterweise hat der Benutzer dadurch eine bessere Zugriffsmöglichkeit auf das auf dem zweiten unteren Stetigförderer angediente Stückgut.

Konkrete Ausführungsbeispiele der Erfindung sind in der nachfolgenden Beschreibung unter Bezugnahme auf die beigefügten Figuren näher erläutert. Konkrete Merkmale dieser exemplarischen Ausführungsbeispiele können unabhängig davon, in welchem konkreten Zusammenhang sie erwähnt sind, gegebenenfalls auch einzeln oder in weiteren Kombinationen betrachtet, allgemeine Merkmale der Erfindung darstellen.

Es zeigen:
- Fig. 1: eine perspektivische Darstellung einer beispielhaften fördertechnischen Rollenbahn mit einem Anschlagmittel und einer Kippvorrichtung für ein Stückgut in Form eines Transportbehälters in der Ausgangslage,
- Fig. 2: eine perspektivische Darstellung der Rollenbahn gemäß Fig. 1 mit dem Transportbehälter in der Endlage,
- Fig. 3: eine perspektivische Darstellung der Kippvorrichtung mit dem Direktantriebsmotor und einem Zugmitteltrieb in Alleinstellung mit einer Kontaktrolle in ihrer Verwahrungsposition,
- Fig. 4: eine perspektivische Darstellung der Kippvorrichtung gemäß Fig. 3 mit der Kontaktrolle in ihrer Betätigungsposition,
- Fig. 5: eine Seitenansicht auf eine zweite Ausführungsform einer Kippvorrichtung mit einem Vorgelege und einem Zugmitteltrieb,
- Fig. 6: eine perspektivische Darstellung der Kippvorrichtung mit dem Vorgelege und dem Zugmitteltrieb gemäß Fig. 5 in Alleinstellung und mit der Kontaktrolle in ihrer Verwahrungsposition,
- Fig. 7: eine perspektivische Darstellung der Kippvorrichtung mit dem Vorgelege und dem Zugmitteltrieb gemäß Fig. 5 in Alleinstellung und mit der Kontaktrolle in ihrer Betätigungsposition,
- Fig. 8: eine schematische Darstellung einer ersten Variante eines beispielhaften Abkippvorgangs mittels der Kippvorrichtung an einem Stückgut in Form eines Transportbehälters mit einem Drehpunkt an der unteren Vorderkante des Transportbehälters,
- Fig. 9: eine schematische Darstellung einer zweiten Variante eines beispielhaften Abkippvorgangs mittels der Kippvorrichtung an einem Stückgut in Form eines Transportbehälters mit einem Drehpunkt innerhalb des Transportbehälters,
- Fig. 10: eine schematische Darstellung einer alternativen Ausführungsform einer Kippvorrichtung, die wenigstens ein am Gestell beweglich gelagertes Schwenkmittel aufweist,
- Fig. 11: eine schematische Darstellung einer alternativen Ausführungsform einer Kippvorrichtung, die wenigstens einen am Gestell schwenkbar gelagerten Schwenk-arm als ein Schwenkmittel aufweist, der an seinem distalen Schwenkarmende die Kontakteinrichtung aufweist,
- Fig. 12: eine schematische Darstellung einer abgewandelten Ausführungsform einer Kippvorrichtung, die eine Tragplatte mit randgeschlossenen Ausschnitten für Rollen der Rollenbahn umfasst, zum Schwenken der Tragplatte um eine parallel zu den Drehachsen der Rollen verlaufende Schenkachse,
- Fig. 13: eine schematische Darstellung der Tragplatte gemäß Fig. 12 in Alleinstellung in einer Ansicht von oben,
- Fig. 14: eine schematische Darstellung einer abgewandelten Ausführungsform einer Kippvorrichtung, die eine kammartige Tragplatte umfasst, zum Schwenken der kammartigen Tragplatte um eine rechtwinklig zu den Drehachsen der Rollen verlaufende Schwenkachse,
- Fig. 15: eine schematische perspektivische Darstellung der Trageinrichtung gemäß Fig. 12 und Fig. 13 mit vier leistenartigen oder kammartigen Erhebungen, und
- Fig. 16: eine schematische Seitenansicht auf ein System zweier Stetigförderer.

Die in der Fig. 1 dargestellte fördertechnische Rollenbahn 1a als ein konkretes Beispiel eines erfindungsgemäßen flurgebundenen Stetigförderers 1 weist wenigstens ein Gestell 2 und eine Vielzahl von an dem Gestell 2 drehbar gelagerten, nebeneinander beabstandet angeordneten Rollen 3 auf. Die Rollen 3 bilden eine Förderebene E für Stückgüter 4. Die Förderrichtung F der Rollen 3 verläuft zumindest im Wesentlichen quer zur Drehachse D der Rollen 3. Die Stückgüter 4 sind im Falle des vorliegenden Ausführungsbeispiels als Transportbehälter ausgebildet, in denen ihrerseits andere Stückgüter bzw. Waren oder Gegenstände, beispielsweise nach Art gruppiert transportiert werden können.

Die fördertechnische Rollenbahn 1a weist ein Anschlagmittel 5 auf, das ausgebildet ist, ein auf der Förderebene E in Förderrichtung F transportiertes Stückgut 4 an einer vorbestimmten Position auf der Rollenbahn 1a anzuhalten. Das Anschlagmittel 5 kann, wie in Fig. 1 dargestellt ist, von einer feststehenden oder drehbar gelagerten Anschlagsrolle 5a gebildet werden. Das Anschlagmittel 5 bzw. die Anschlagsrolle 5a kann aus der Förderebene E hervorgehoben werden, um, wie in Fig. 1 dargestellt ist, die Anschlagswirkung zu haben.

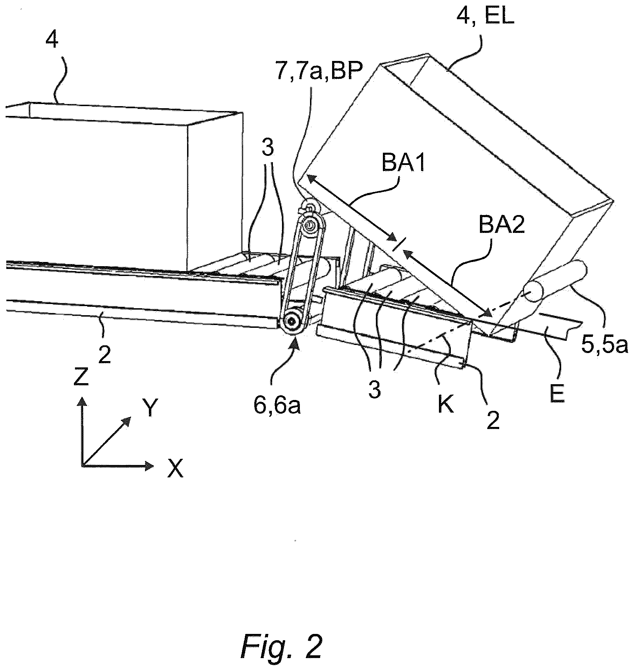

Die fördertechnische Rollenbahn 1a weist außerdem eine Bewegungsvorrichtung 6 auf, die im Falle des vorliegenden Ausführungsbeispiels in der speziellen Ausführungsform als eine Kippvorrichtung 6a ausgebildet ist, die ausgebildet ist, das an dem Anschlagmittel 5 auf der Förderebene E anstehende Stückgut 4 aus seiner auf der Förderebene E stehende Ausgangslage AL (Fig. 1) in eine von der Ausgangslage AL abweichende Endlage EL (Fig. 2) aus der Förderebene E der Rollenbahn 1a herauszukippen.

In der Ausgangslage AL steht das Stückgut 4 mit seiner Bodenwand auf einer der Größe der Bodenfläche des Stückgutes 4 entsprechenden Anzahl von Rollen 3 auf, d.h. das Stückgut 4 steht auf den mehreren Rollen 3 flächig auf. In der Endlage EL ist das Stückgut 4 mittels der Kippvorrichtung 6a zumindest von mehreren Rollen 3 abgehoben, ohne dass die Rollen 3 und/oder das Gestell 2 seine Position und Lage verändern. In der Endlage EL gemäß Fig. 2 stützt sich das Stückgut 4 lediglich an einer einzigen Rolle der Rollen 3 und an dem Anschlagmittel 5 bzw. der Anschlagsrolle 5a ab. Je nach eingestellter Höhenlage der Kippvorrichtung 6a kann das Stückgut 4 in einen entsprechend variierten Kippwinkel gebracht werden. Mittels der Kippvorrichtung 6a kann das Stückgut 4 gekippt werden, ohne dass dazu die Rollen 3 und/oder das Gestell 2 der fördertechnischen Rollenbahn 1a in ihren jeweiligen Positionen und/oder Lagen verändert werden müssten.

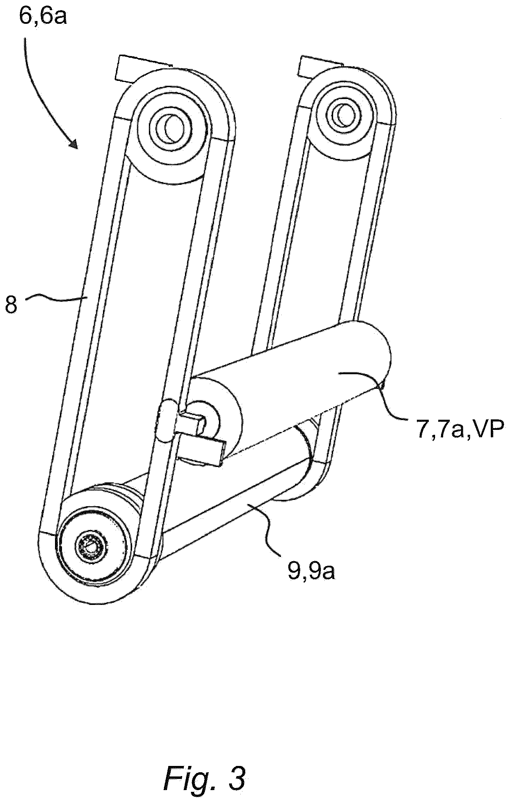

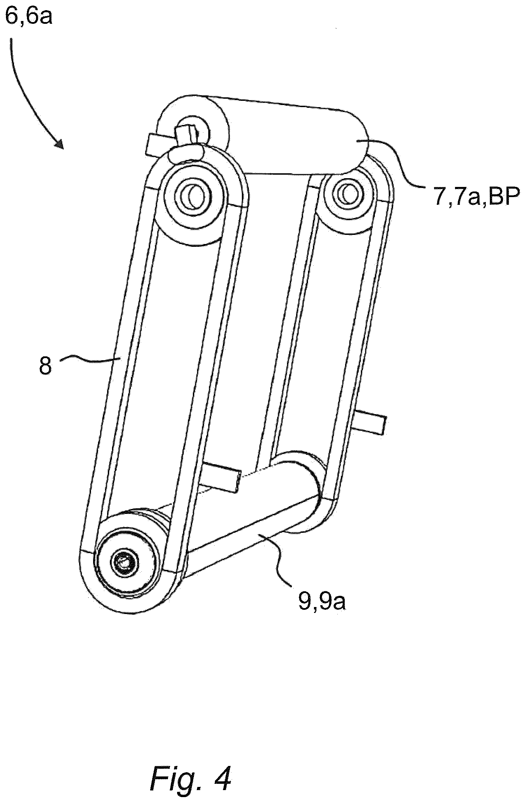

Die Kippvorrichtung 6a ist insoweit ortsfest bezüglich des Gestells 2 der Rollenbahn 1a angeordnet. Die Kippvorrichtung 6a weist jedoch, wie insbesondere in Fig. 3 und Fig. 4 aufgezeigt ist, eine verstellbare Kontakteinrichtung 7 auf, die ausgebildet ist zum Kippen des an dem Anschlagmittel 5 anstehenden Stückgutes 4 aus seiner Ausgangslage AL in seine Endlage EL, wobei die Kontakteinrichtung 7 dazu aus einer Verwahrungsposition VP (Fig. 3) in eine Betätigungsposition BP (Fig. 4) verstellbar bezüglich des Gestells 2 gelagert ist. In der Verwahrungsposition VP befindet sich die Kontakteinrichtung 7 zumindest im Wesentlichen in der Förderebene E, d.h. die Kontakteinrichtung 7 liegt zumindest in etwa in der Höhe der Rollen 3, bzw. steht nicht über die Rollen 3 nach oben hinaus. Dies ist insbesondere in Fig. 1 ersichtlich.

Die Kippvorrichtung 6a ist ausgebildet das an dem Anschlagmittel 5 anstehende Stückgut 4 um eine zumindest im Wesentlichen längs zu den Drehachsen D (Fig. 1) der Rollen 3 ausgerichtete Kippachse K (Fig. 1) zu kippen. Die Kipprichtung der Stückgüter 4 läuft insoweit in Förderrichtung der fördertechnischen Rollenbahn 1a.

Die Kippvorrichtung 6a gemäß den Ausführungsformen nach Fig.1 bis Fig. 7 weist wenigstens eine am Gestell 2 höhenverstellbar gelagerte Kontakteinrichtung 7 auf, die ausgebildet ist, einen von dem Anschlagmittel 5 abgewandten Bodenabschnitt BA1 des Stückgutes 4 von unten anzuheben, um das Stückgut 4 in seine Endlage EL abzukippen. Der von dem Anschlagmittel 5 abgewandten Bodenabschnitt BA1 des Stückgutes 4 wird insoweit von derjenigen Bodenhälfte gebildet, die bezüglich des Massenschwerpunkts des Stückgutes 4 so weit von der Seite des Anschlagmittels 5 entfernt liegt, so dass bei einem Anheben des Stückgutes 4 durch die Kontakteinrichtung 7 das angehobene Stückgut 4 nach vorne in Richtung des Anschlagmittels 5 kippt und nicht in die entgegengesetzte Richtung.

Der Boden des Stückgutes 4 kann eingeteilt werden in den soeben beschriebenen von dem Anschlagmittel 5 abgewandten Bodenabschnitt BA1 und einem dem Anschlagmittel 5 zugewandten Bodenabschnitt BA2. Der Bodenabschnitt BA1 und der Bodenabschnitt BA2 können sich insoweit zu der gesamten Bodenfläche des Stückgutes 4 ergänzen (Fig.2).

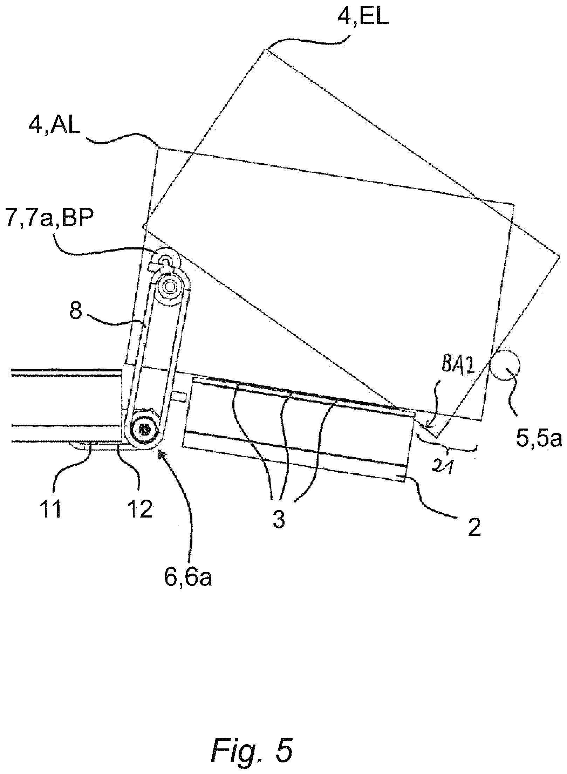

Die Kippvorrichtung 6a kann demgemäß wenigstens eine am Gestell 2 höhenverstellbar gelagerte Kontakteinrichtung 7 aufweisen, die ausgebildet ist, einen dem Anschlagmittel 5 zugewandten Bodenabschnitt BA2 des Stückgutes 4 zumindest abschnittsweise abzusenken, um das Stückgut 4 in seine Endlage EL abzukippen, wie dies insbesondere in Fig. 5 veranschaulicht ist.

Fig. 5 zeigt, dass das Stückgut sich während des Kippens mit seiner dem Anschlagmittel proximalen Seite (BA2) in einen Leerraum (21) bzw. eine Lücke zu verlagern, welche sich insbesondere zwischen dem Anschlagmittel 5 und Lastaufnahmemittel 3 erstreckt. Dadurch sinkt das Stückgut vorteilhafterweise in seiner Position vertikal nach unten.

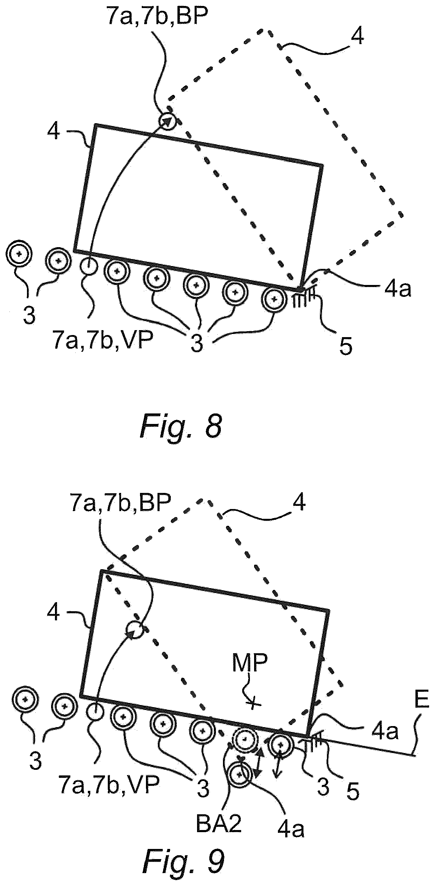

Ein derartiges, zumindest teilweises Absenken des Bodenabschnitts BA2 ist in einem geringfügigen Ausmaß bereits in Fig. 2 dargestellt. Besonders deutlich ist ein solches Absenken des Bodenabschnitts BA2 in der Ausführungsvariante gemäß Fig. 9 dargestellt. Dort führt das Stückgut 4 keine Schwenkbewegung um seine vordere untere Ecke 4a durch, wie dies beispielsweise in Fig. 8 dargestellt ist, sondern um einen Momentanpol MP, der innerhalb des Volumens des Stückgutes 4 liegt, wie dies in Fig. 9 dargestellt ist. In diesem Fall der Fig. 9 taucht die vordere untere Ecke 4a demgemäß unter die Förderebene E ein, so dass der dem Anschlagmittel 5 zugewandten Bodenabschnitt BA2 des Stückgutes 4 zumindest abschnittsweise abgesenkt wird. In der Ausführung gemäß Fig. 9 kann das Anschlagmittel 5 bzw. die Anschlagsrolle 5a gegebenenfalls auch von einer der Rollen 3 gebildet werden. Bevorzugt ist eine oder mehrere der Rollen 3 relativ zu den anderen Rollen 3 verlagerbar ausgebildet. Die dem Anschlagmittel 5 nächstliegende Rolle ist nach einer Verlagerung wieder in ihrer Ausgangsstellung dargestellt und stützt eine Seitenwand des Stückgutes 4. Bevorzugt kann die, insbesondere lineare, Verlagerung in einer Richtung im Wesentlichen senkrecht zur Förderebene E erfolgen. Dazu können eine oder mehrere der Rollen 3, insbesondere durch einen zugeordneten Antrieb, verschiebbar angeordnet sein.

Wie die Ausführungsformen gemäß Fig. 3, 4, 6 und Fig. 7 zeigen, ist die Kontakteinrichtung 7 erfindungsgemäß an einem ersten Zugmittel 8 der Kippvorrichtung 6a umlaufend oder reversierend höhenverstellbar gelagert, wobei das Zugmittel 8 an dem Gestell 2 gelagert und durch einen Motor 9 angetrieben ist.

Im Falle der Ausführungsform gemäß Fig. 3 und Fig. 4 wird der Motor 9 von einem Trommelmotor 9a gebildet. Dies ermöglicht die Verwendung von Gleichteilen. Demgemäß können Trommelmotoren, die auch als angetriebene Rollen 3 der fördertechnischen Rollenbahn 1a verwendet werden, als Motor 9 zum Betätigen der Kippvorrichtung 6a eingesetzt werden. Im Falle von angetriebenen Rollen 3 ist die Achse des Trommelmotors 9a bezüglich dem Gestell 2 festgelegt und die Mantelwand des Trommelmotors 9a, welche die Rolle 3 bildet, dreht sich.

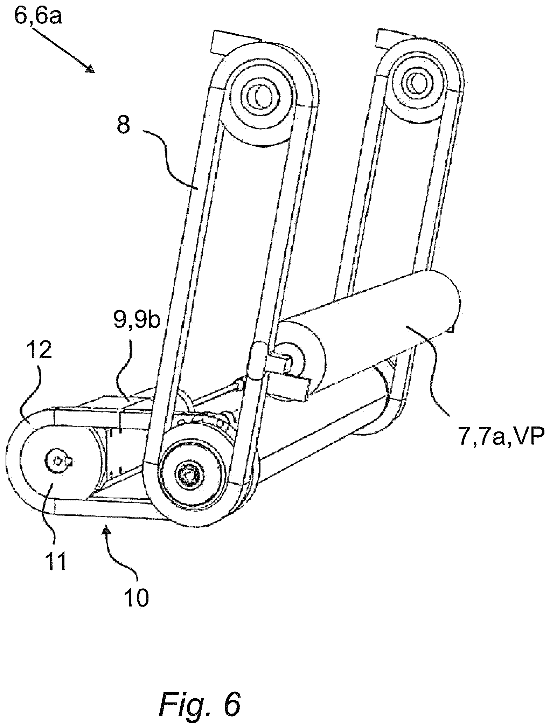

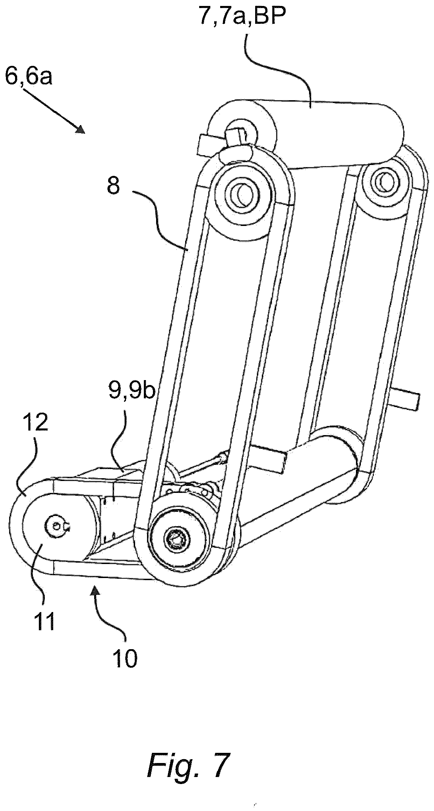

Im Falle der Ausführungsform gemäß Fig. 6 und Fig. 7 wird der Motor 9 von einem Vorgelegemotor 9b gebildet. In der Ausführung als ein Vorgelegemotor 9b kann eine zusätzliche Übersetzungsstufe 10 realisiert werden, bei der die Welle des Vorgelegemotors 9b ein separates Antriebsritzel 11 aufweist, welches über ein zweites Zugmittel 12 einen Abtrieb 13 antreibt, der das erste Zugmittel 8 antreibt. Statt eines Antriebsritzels 11 mit Zähnen kann beispielsweise auch eine Riemenscheibe (nicht dargestellt) vorgesehen sein.

Generell können das erste Zugmittel 8 und/oder das zweite Zugmittel 12 wahlweise beispielsweise als eine Kette, ein Zahnriemen, Keilriemen oder Flachriemen ausgebildet sein. Entsprechend sind die in Fig. 1 bis Fig. 7 dargestellten Antriebsritzel 11 und sonstigen Zahnräder durch passende Riemenscheiben zu ersetzen.

Die Kontakteinrichtung 7 kann, wie in Fig.1 bis Fig. 7 dargestellt ist, von einer drehbar gelagerten Kontaktrolle 7a gebildet werden, die in ihrer Verwahrungsposition VP zwischen zwei benachbarten Rollen 3 der Rollenbahn 1a unter der Förderebene E der Rollen 3 oder in der Förderebene E der Rollen 3 positioniert ist, wie dies insbesondere in Fig. 1 ersichtlich ist. In einer alternativen Ausführungsform kann die Fig.1 bis Fig. 5 dargestellte drehbare Kontaktrolle 7a durch eine feste Stange, insbesondere eine Kreiszylinderstange 7b ersetzt sein, wie dies beispielsweise in Fig. 8 und Fig. 9 angedeutet ist. Auch wenn es vorteilhaft sein kann, wenn während eines Kippvorgangs der Boden des Stückgutes 4 auf einer drehbar gelagerten Kontaktrolle 7a abwälzen kann, so kann auch, je nach Oberflächenbeschaffenheit des Bodens des Stückgutes 4 und/oder der Manteloberfläche einer festen Stange, insbesondere einer Kreiszylinderstange 7b, ein Gleiten des Bodens des Stückgutes 4 auf der Manteloberfläche der feststehenden, d.h. nicht rotierenden Stange bzw. der Kreiszylinderstange 7b ausreichend und zweckmäßig sein.

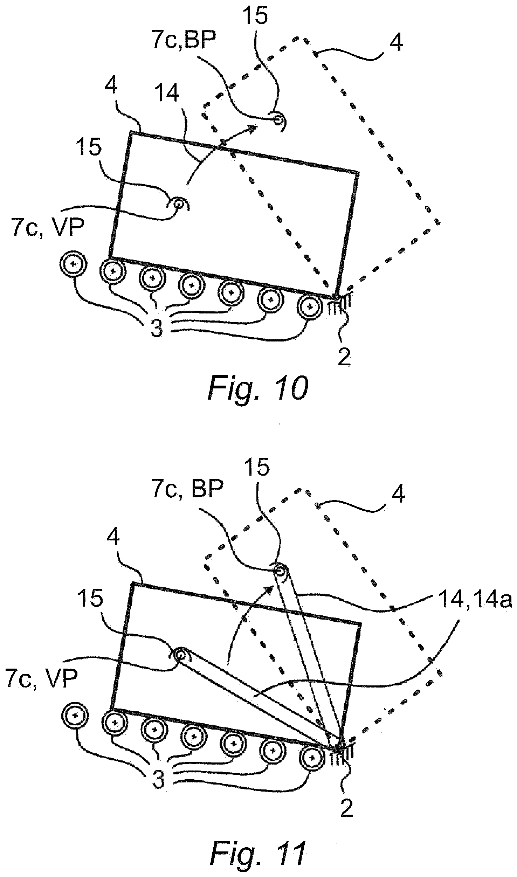

Die Kippvorrichtung 6a kann in einer alternativen Ausführung statt einem Zugmittel 8 wenigstens ein am Gestell 2 schwenkbar gelagertes Schwenkmittel 14 (Fig. 10) insbesondere einen Schwenkarm 14a (Fig. 11) aufweisen, der an seinem distalen Schwenkarmende die Kontakteinrichtung 7, beispielsweise in Form eines in Richtung dem Stückgut 4 seitlich vorspringen Zapfen 7c aufweist. Während der Kippbewegung greift der seitlich vorspringende Zapfen 7c, insbesondere zwei an gegenüberliegenden lateralen Seiten, an das Stückgut 4 in einen oder mehrere korrespondierende Aufnahmen 15, die mit dem Stückgut 4 verbunden sind, formschlüssig ein. Die Aufnahmen 15 am Stückgut 4 können beispielsweise einteilig mit den lateralen Seitenwänden des Stückguts 4 ausgebildet sein.

Der Zapfen 7c der Kontakteinrichtung 7 kann insoweit ein Halteglied bilden, das ausgebildet ist, während des Kippens des Stückgutes 4 mit einer als Rücksprung ausgebildeten Aufnahmen 15 jeweils an einer lateralen Seitenwand des Stückgutes 4 formschlüssig zusammenzuwirken.

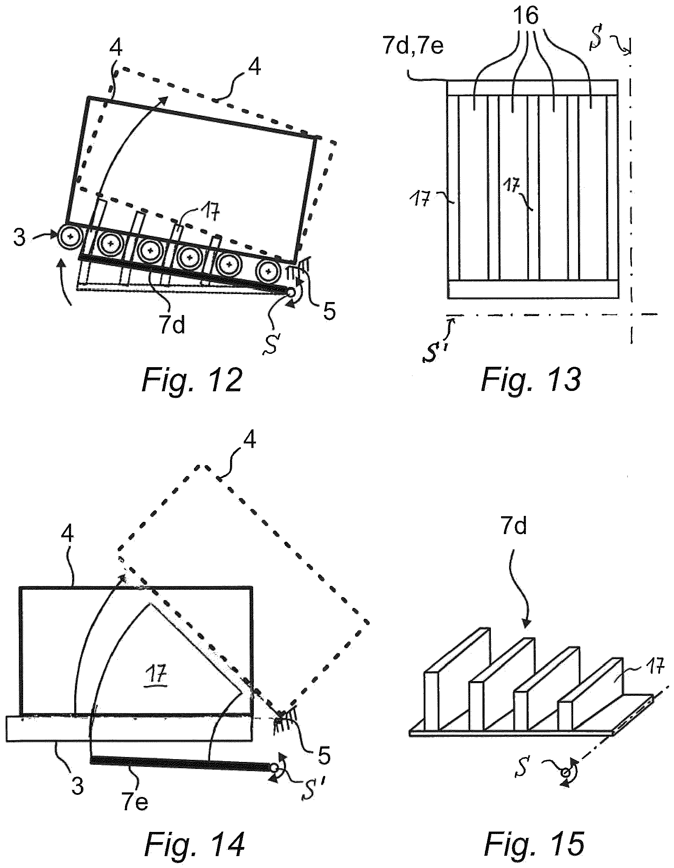

In einer weiteren Ausführungsvariante gemäß Fig. 12, Fig. 13 und Fig. 15 kann die Kontakteinrichtung 7 von einer ersten Trageinrichtung 7d gebildet werden, die beispielsweise mehrere Ausschnitte 16 bzw. mehrere leistenartige oder kammartige Erhebungen 17 als bevorzugtes Konturenelement 17 aufweist, von denen jeweils eine jeweils zwischen zwei Rollen 3 der Rollenbahn 1a beweglich hindurchragt, wie dies insbesondere in Fig. 12 und Fig. 15 ersichtlich ist, wobei die Trageinrichtung 7d bzw. dessen leistenartige oder kammartige Erhebungen ausgebildet sind, von unten einen Bodenabschnitt des Stückgutes 4 tragend anzuheben und zu schwenken, um das Stückgut 4 in seine Endlage EL abzukippen, wie dies in Fig. 12 veranschaulicht ist. Die Fig. 13 zeigt die Trageinrichtung 7d in einer Draufsicht in Alleinstellung mit fünf Konturenelementen 17 zwischen denen vier Ausschnitte 16 angeordnet sind, wobei jeweils eine Rolle 3 einem der Ausschnitte 16 zuordenbar ist. In dieser Ausführungsvariante ist die Trageinrichtung 7d zum Schwenken um eine parallel zu den Drehachsen der Rollen 3 verlaufende Schwenkachse S ausgebildet. Die Fig. 15 zeigt die Trageinrichtung 7d in einer schematischen perspektivischen Darstellung mit seinen vier leistenartigen oder kammartigen Erhebungen.

In einer weiteren Ausführungsvariante gemäß Fig. 14 kann die Kontakteinrichtung 7 von einer kammartigen zweiten Trageinrichtung 7e gebildet werden, die beispielsweise mehrere parallel zueinander ausgerichtete, voneinander beabstandete, Kämme 17 als bevorzugte Konturelemente 17 aufweist. In dieser Ausführungsvariante ist die kammartige Trageinrichtung 7e zum Schwenken um eine rechtwinklig zu den Drehachsen der Rollen 3 verlaufende Schwenkachse S ausgebildet, wie sie auch in Fig. 13 dargestellt ist. In Fig. 13 ist gezeigt, dass die Schwenkachse S im Wesentlichen orthogonal zur Schwenkachse S orientiert ist.

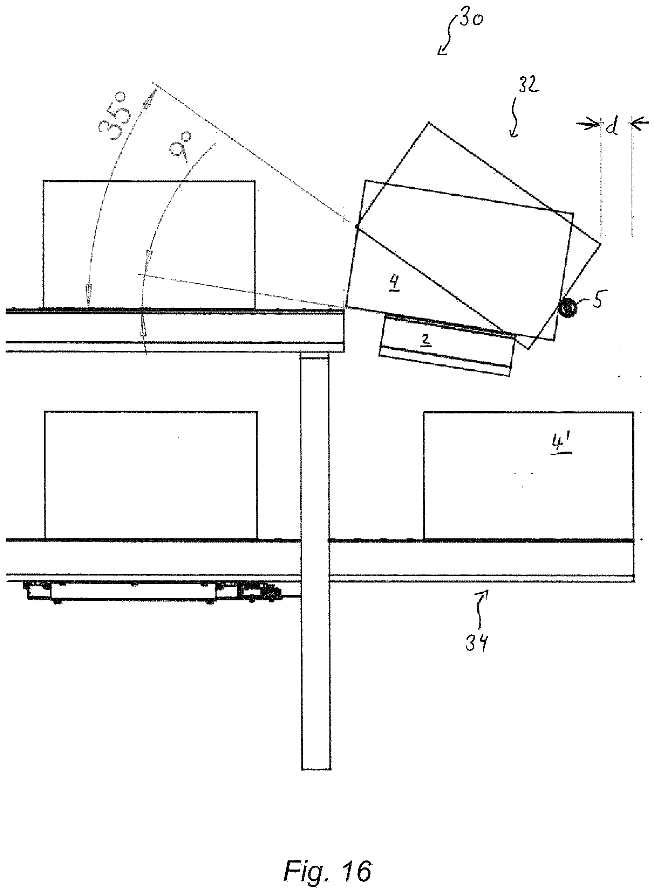

Die Figur 16 zeigt ein System 30 mit einem ersten erfindungsgemäßen flurgebundenen Stetigförderer 32 und einen unterhalb des ersten Steigförderers 32 angeordneten zweiten Stetigförderer 34. Die Elemente, insbesondere des ersten Stetigförderers, die bereits in den vorherigen Figuren beschrieben und dazu identisch sind, sind in Figur 16 mit identischen Bezugszeichen gekennzeichnet.

Das Gestell 2 mit den Lastaufnahmemitteln 3 des ersten Stetigförderer ist in dieser Ausführungsform um etwa 9 Grad gegenüber der Horizontalen zum Benutzer hingeneigt. In der Endlage ist das Stückgut 4 in dieser Ausführung um etwa 35 Grad gegenüber der Horizontalen zum Benutzer hin gekippt. Dagegen ist der zweite Stetigförderer horizontal orientiert und das Stückgut 4 wird nicht gekippt. Der Benutzer erhält dennoch einen Zugriff auf das Stückgut, da der zweite Stetigförderer derart unterhalb des ersten Stetigförderers 32 angeordnet ist, dass der zweite Stetigförderer 32 bzw. das darauf angediente Stückgut 4 zum Benutzer hin gegenüber dem ersten Stetigförderer 32 bzw. das darauf angediente Stückgut 4 um eine Distanz d vorsteht. Dieser Vorstand d ist ausreichend dimensioniert, dass der Benutzer zumindest einen Gegenstand vom Stückgut 4 greifen und in das Stückgut 4 legen kann.

## Patentansprüche

1. Flurgebundener Stetigförderer der Intralogistik, aufweisend wenigstens ein starr mit dem Untergrund verbundenes Gestell (2) und wenigstens ein Lastaufnahmemittel (3), das eine Förderebene für Stückgüter (4) aufweist und das ausgebildet ist, die Stückgüter in einer Förderrichtung (F) zu transportieren, wobei ein Anschlagmittel (5) vorgesehen ist, das ausgebildet ist, ein auf der Förderebene (E) in Förderrichtung (F) transportiertes Stückgut (4) an einer vorbestimmten Position auf dem Lastaufnahmemittel (3) anzuhalten, und aufweisend eine Bewegungsvorrichtung (6), die ausgebildet ist, das an dem Anschlagmittel (5) auf der Förderebene (E) anstehende Stückgut (4) aus seiner auf der Förderebene (E) des Lastaufnahmemittels (3) stehende Ausgangslage (AL) in eine von der Ausgangslage (AL) abweichende Endlage (EL) auf dem Lastaufnahmemittel (3) aus der Förderebene (E) des Lastaufnahmemittels (3) in die Endlage (EL) zu bewegen, wobei die Bewegungsvorrichtung (6) eine Kippvorrichtung (6a) ist, die ortsfest bezüglich des Gestells (2) angeordnet ist und eine verstellbare Kontakteinrichtung (7) aufweist, die ausgebildet ist zum Kippen des an dem Anschlagmittel (5) anstehenden Stückgutes (4) aus seiner Ausgangslage (AL) in seine Endlage (EL), wobei die Kontakteinrichtung (7) dazu aus einer Verwahrungsposition (VP) in eine Betätigungsposition (BP) relativ zum Lastaufnahmemittel (3) verstellbar bezüglich des Gestells (2) beweglich gelagert ist, **dadurch gekennzeichnet, dass** die Kontakteinrichtung (7) an einem Zugmittel (8) der Bewegungsvorrichtung (6) oder der Kippvorrichtung (6a) umlaufend oder reversierend höhenverstellbar gelagert ist, wobei das Zugmittel (8) an dem Gestell (2) gelagert und durch einen Motor (9) angetrieben ist.

2. Flurgebundener Stetigförderer nach Anspruch 1, **dadurch gekennzeichnet, dass** der flurgebundene Stetigförderer wenigstens einen Rollenförderer, einen Bandförderer, einen Kettenförderer, einen Schwingförderer und/oder eine Rutsche aufweist, wobei die Förderebene zumindest im Wesentlichen horizontal oder in einem Winkel bis zu 15 Grad aus der Horizontalen heraus geneigt angeordnet ist.

3. Flurgebundener Stetigförderer nach Anspruch 1 oder 2, **dadurch gekennzeichnet, dass** die Bewegungsvorrichtung (6) oder die Kippvorrichtung (6a) ausgebildet ist, das an dem Anschlagmittel (5) anstehende Stückgut (4) automatisch um eine zumindest im Wesentlichen längs zur Förderrichtung (F) ausgerichtete Kippachse zu kippen.

4. Flurgebundener Stetigförderer nach Anspruch 1 oder 2, **dadurch gekennzeichnet, dass** die Bewegungsvorrichtung (6) oder die Kippvorrichtung (6a) ausgebildet ist, das an dem Anschlagmittel (5) anstehende Stückgut (4) automatisch um eine zumindest im Wesentlichen quer zur Förderrichtung (F) ausgerichtete Kippachse zu kippen.

5. Flurgebundener Stetigförderer nach einem der Ansprüche 3 oder 4, **dadurch gekennzeichnet, dass** automatische Kippen erfolgt, wenn das Stückgut als am Anschlag anstehend mittels eines Sensors detektiert wurde.

6. Flurgebundener Stetigförderer nach einem der vorherigen Ansprüche, wobei der Steigförderer ausgelegt ist, dass eine Verlagerung der Kippachse des Stückgutes während einer Verlagerung des Stückgutes von der Ausgangslage in die Endlage erfolgt.

7. Flurgebundener Stetigförderer nach einem der vorherigen Ansprüche, wobei sich ein Leerraum (21) zwischen dem Anschlagmittel (5) und Lastaufnahmemittel (3) erstreckt, wodurch es dem Stückgut während des Kippens ermöglicht wird, sich mit seiner dem Anschlagmittel proximalen Seite in diesen Leerraum (21) zu verlagern.

8. Flurgebundener Stetigförderer nach einen der vorherigen Ansprüche, **dadurch gekennzeichnet, dass** die Bewegungsvorrichtung (6) oder die Kippvorrichtung (6a) wenigstens eine am Gestell (2) höhenverstellbar gelagerte Kontakteinrichtung (7) und/oder ein höhenverstellbar gelagertes Lastaufnahmemittel (3) aufweist, die und/oder das ausgebildet ist, einen dem Anschlagmittel (5) zugewandten Bodenabschnitt (BA2) des Stückgutes (4) abzusenken, um das Stückgut (4) in seine Endlage (EL) abzukippen.

9. Flurgebundener Stetigförderer nach einen der Ansprüche 1 bis 8, **dadurch gekennzeichnet, dass** die Kontakteinrichtung (7) von einer festen Stange, insbesondere Kreiszylinderstange (7b) oder einer drehbar gelagerten, insbesondere angetriebene Kontaktrolle (7a) gebildet wird, die in ihrer Verwahrungsposition (VP) unter der Förderebene (E) oder in der Förderebene (E) positioniert ist.

10. Flurgebundener Stetigförderer nach einem der Ansprüche 1 bis 9, wobei der flurgebundene Stetigförderer als wenigstens ein Rollenförderer (1a) ausgebildet ist und eine Vielzahl von an dem Gestell (2) drehbar gelagerte, nebeneinander beabstandet angeordnete Rollen (3a) als Lastaufnahmemittel (3) aufweist, welche die Förderebene für die Stückgüter (4) bilden, deren Förderrichtung (F) zumindest im Wesentlichen quer zur Drehachse (D) der Rollen (3a) verläuft, wobei das Anschlagmittel (5) ausgebildet ist, ein auf der Förderebene (E) in Förderrichtung (F) transportiertes Stückgut (4) an einer vorbestimmten Position auf den Rollen (3a) zu halten, und die Kippvorrichtung (6) ausgebildet ist, das an dem Anschlagmittel (5) auf der Förderebene (E) anstehende Stückgut (4) aus seiner auf der Förderebene (E) stehende Ausgangslage (AL) in eine von der Ausgangslage (AL) abweichende Endlage (EL) aus der Förderebene (E) des Lastaufnahmemittels (3) herauszukippen.

11. Flurgebundener Stetigförderer nach Anspruch 10, **dadurch gekennzeichnet, dass** die Kippvorrichtung (6a) ortsfest bezüglich des Gestells (2) des Rollenförderers (1a) angeordnet ist und die Kontakteinrichtung (7) aus einer Verwahrungsposition (VP) in eine Betätigungsposition (BP) relativ zu den Rollen (3a) des Rollenförderers (1a) verstellbar bezüglich des Gestells (2) beweglich gelagert ist.

12. Flurgebundener Stetigförderer nach Anspruch 10 oder 11, **dadurch gekennzeichnet, dass** die Kippvorrichtung (6a) ausgebildet ist, das an dem Anschlagmittel (5) anstehende Stückgut (4) um eine zumindest im Wesentlichen längs oder quer zu den Drehachsen (D) der Rollen (3a) ausgerichtete Kippachse zu kippen.

13. Flurgebundener Stetigförderer nach einem der Ansprüche 10 bis 12, **dadurch gekennzeichnet, dass** die Kontakteinrichtung (7) von einer Tragplatte (7d) gebildet wird, die wenigstens einen Ausschnitt (16) für eine der Rollen (3) der Rollenbahn (1) aufweist, wobei die Tragplatte (7d) ausgebildet ist, von unten einen Bodenabschnitt des Stückgutes (4) tragend anzuheben und zu schwenken, um das Stückgut (4) in seine Endlage (EL) abzukippen.

14. System (30) aufweisend:
zumindest einen erster flurgebundenen Stetigförderer (32) gemäß einem der vorherigen Ansprüche und
zumindest einen zweiten flurgebundener Stetigförderer (34), bevorzugt gemäß einem der vorherigen Ansprüche, welcher zumindest bereichsweise unterhalb des ersten Stetigförderers (32) angeordnet ist.

## Claims

1. Floor-bound continuous conveyor for intralogistics, comprising at least one frame (2) rigidly connected to the ground and at least one load-carrying means (3) which has a conveying plane for unit loads (4) and which is designed to transport the unit loads (4) in a conveying direction (F), wherein a stop means (5) is provided, which is designed to stop a unit load (4) transported on the conveying plane (E) in the conveying direction (F) at a predetermined position on the load-carrying means (3), and comprising a movement device (6) which is designed to move the unit load (4), which is in contact with the stop means (5) on the conveying plane (E), from its starting position (AL), which is on the conveying plane (E) of the load-carrying means (3), into an end position (EL), which is different from the starting position (AL), on the load-carrying means (3) out of the conveying plane (E) of the load-carrying means (3) into the end position (EL), wherein the movement device (6) is a tilting device (6a) which is arranged in a stationary manner with respect to the frame (2) and has an adjustable contact device (7) which is designed to tilt the unit load (4) resting against the stop means (5) from its starting position (AL) into its end position (EL), wherein the contact device (7) being mounted so as to be movable with respect to the frame (2) from a storage position (VP) into an actuated position (BP) relative to the load-carrying means (3), **characterized in that** the contact device (7) is mounted on a pulling means (8) of the movement device (6) or of the tilting device (6a) so as to be adjustable in height in a rotating or reversing manner, the pulling means (8) being mounted on the frame (2) and being driven by a motor (9).

2. Floor-bound continuous conveyor according to claim 1, **characterized in that** the floor-bound continuous conveyor comprises at least one roller conveyor, a belt conveyor, a chain conveyor, an oscillating conveyor and/or a chute, wherein the conveying plane is arranged at least substantially horizontally or inclined at an angle of up to 15 degrees from horizontal.

3. Floor-bound continuous conveyor according to claim 1 or 2, **characterized in that** the movement device (6) or the tilting device (6a) is designed to automatically tilt the unit load (4) resting against the stop means (5) about a tilting axis aligned at least substantially longitudinally to the conveying direction (F).

4. Floor-bound continuous conveyor according to claim 1 or 2, **characterized in that** the movement device (6) or the tilting device (6a) is designed to automatically tilt the unit load (4) resting against the stop means (5) about a tilting axis aligned at least substantially transversely to the conveying direction (F).

5. Continuous conveyor according to one of the claims 3 or 4, **characterized in that** automatic tilting takes place when the unit load (4) has been detected as being in contact with the stop by means of a sensor.

6. Floor-bound continuous conveyor according to any one of the preceding claims, wherein the continuous conveyor is adapted to cause a displacement of the tilting axis of the unit load (4) during a displacement of the unit load from the initial position to the final position.

7. A floor-bound continuous conveyor according to any one of the preceding claims, wherein a void space (21) extends between the stop means (5) and load-carrying means (3), thereby enabling the unit load to shift into said void space (21) with its side proximal to the stop means during tilting.

8. Floor-bound continuous conveyor according to one of the preceding claims, **characterized in that** the movement device (6) or the tilting device (6a) has at least one contact device (7) which is mounted on the frame (2) such that it can be adjusted in height and/or a load-carrying means (3) which is mounted such that it can be adjusted in height and which is designed to lower a floor section (BA2) of the unit load (4) facing the stop means (5) in order to tilt the unit load (4) into its end position (EL).

9. Floor-bound continuous conveyor according to one of the claims 1 to 8, **characterized in that** the contact device (7) is formed by a fixed rod, in particular a circular cylinder rod (7b) or a rotatably mounted, in particular driven contact roller (7a), which is positioned in its storage position (VP) below the conveying plane (E) or in the conveying plane (E).

10. Floor-bound continuous conveyor according to one of the claims 1 to 9, wherein the floor-bound continuous conveyor is designed as at least one roller conveyor (1a) and has a multiplicity of rollers (3a) which are rotatably mounted on the frame (2) and are arranged at a distance from one another next to one another and are used as load-carrying means (3) and which form the conveying plane for the unit loads (4), the conveying direction (F) of which runs at least essentially transversely with respect to the axis of rotation (D) of the rollers (3a), wherein the stop means (5) being designed to hold a unit load (4) transported on the conveying plane (E) in the conveying direction (F) at a predetermined position on the rollers (3a), and the tilting device (6a) being designed to tilt the unit load (4), which is in contact with the stop means (5) on the conveying plane (E), out of its starting position (AL) on the conveying plane (E) into an end position (EL), which is different from the starting position (AL), out of the conveying plane (E) of the load-carrying means (3) .

11. Floor-bound continuous conveyor according to claim 10, **characterized in that** the tilting device (6a) is arranged stationary with respect to the frame (2) of the roller conveyor (1a) and the contact device (7) is mounted movably with respect to the frame (2) from a storage position (VP) into an actuated position (BP) relative to the rollers (3a) of the roller conveyor (1a) .

12. Floor-bound continuous conveyor according to claim 10 or 11, **characterized in that** the tilting device (6a) is designed to tilt the unit load (4) resting against the stop means (5) about a tilting axis aligned at least substantially longitudinally or transversely to the axes of rotation (D) of the rollers (3a).

13. Floor-bound continuous conveyor according to one of the claims 10 to 12, **characterized in that** the contact device (7) is formed by a support plate (7d) which has at least one cutout (16) for one of the rollers (3a) of the roller conveyor (1), the support plate (7d) being designed to lift and pivot from below a bottom portion of the unit load (4) in a load-bearing manner in order to tilt the unit load (4) into its end position (EL).

14. System (30) comprising:
at least one first floor-bound continuous conveyor (32) according to one of the preceding claims, and
at least one second floor-bound continuous conveyor (34), preferably according to one of the preceding claims, which is arranged at least regionally below the first continuous conveyor (32).

## Revendications

1. Convoyeur continu au sol pour l'intralogistique, présentant au moins un bâti (2) relié rigidement au sol et au moins un moyen de réception de charge (3), qui comprend un plan de convoyage pour des marchandises de détail (4) et qui est réalisé de manière à pouvoir transporter des marchandises de détail (4) dans une direction de convoyage (F), dans lequel est prévu un moyen de butée (5) qui est réalisé pour arrêter une marchandise de détail (4) transportée sur le plan de convoyage (E) dans la direction de convoyage (F) à une position prédéterminée sur le moyen de réception de charge (3), et présentant un dispositif de déplacement (6) qui est réalisé pour déplacer sur le plan de convoyage (E) la marchandise de détail (4) se trouvant sur le moyen de butée (5), depuis sa position initiale (AL) située sur le plan de convoyage (E) du moyen de réception de charge (3) jusque dans une position finale (EL) différente de la position initiale (AL) située sur le moyen de réception de charge (3) du plan de convoyage (E) du moyen de réception de charge (3) jusque dans la position finale (EL), le dispositif de déplacement (6) étant un dispositif de basculement (6a), qui est agencé de manière fixe par rapport au bâti (2) et qui présente un dispositif de contact (7) réglable qui est réalisé pour faire basculer la marchandise de détail (4) se trouvant sur le moyen de butée (5) depuis sa position initiale (AL) jusque dans sa position finale (EL), le dispositif de contact (7) étant monté à cet effet de manière mobile depuis une position de garde (VP) jusque dans une position d'actionnement (BP) par rapport au bâti (2), de manière réglable par rapport au moyen de réception de charge (3), **caractérisé en ce que** le dispositif de contact (7) est monté sur un moyen de traction (8) du dispositif de déplacement (6) ou du dispositif de basculement (6a) de manière à pouvoir être réglé en hauteur de manière rotative ou réversible, le moyen de traction (8) étant monté sur le bâti (2) et étant entraîné par un moteur (9).

2. Convoyeur continu au sol selon la revendication 1, **caractérisé en ce que** le convoyeur continu au sol présente au moins un convoyeur à rouleaux, un convoyeur à bande, un convoyeur à chaîne, un convoyeur oscillant et/ou une glissière, le plan de convoyage étant disposé au moins sensiblement à l'horizontale ou de manière inclinée d'un angle pouvant atteindre 15 degrés par rapport à l'horizontale.

3. Convoyeur continu au sol selon la revendication 1 ou 2, **caractérisé en ce que** le dispositif de déplacement (6) ou le dispositif de basculement (6a) est réalisé de manière à faire basculer automatiquement la marchandise de détail se trouvant sur le moyen de butée (5) autour d'un axe de basculement orienté au moins sensiblement le long de la direction de convoyage (F).

4. Convoyeur continu au sol selon la revendication 1 ou 2, **caractérisé en ce que** le dispositif de déplacement (6) ou le dispositif de basculement (6a) est réalisé de manière à faire basculer automatiquement la marchandise (4) se trouvant sur le moyen de butée (5) autour d'un axe de basculement orienté au moins sensiblement transversalement à la direction de convoyage (F).

5. Convoyeur continu au sol selon l'une des revendications 3 ou 4, **caractérisé en ce que** le basculement automatique a lieu lorsque la marchandise de détail (4) a été détectée comme étant se trouvant sur la butée au moyen d'un capteur.

6. Convoyeur continu au sol selon l'une des revendications précédentes, dans lequel le convoyeur continu est conçu pour qu'un déplacement de l'axe de basculement de la marchandise de détail (4) se produise pendant un déplacement de la marchandise de détail (4) de la position initiale à la position finale.

7. Convoyeur continu au sol selon l'une quelconque des revendications précédentes, dans lequel un espace vide (21) s'étend entre le moyen de butée (5) et le moyen de réception de charge (3), ce qui permet à la marchandise de détail de se déplacer pendant le basculement dans cet espace vide (21) avec son côté proximal au moyen de butée.

8. Convoyeur continu au sol selon l'une des revendications précédentes, **caractérisé en ce que** le dispositif de déplacement (6) ou le dispositif de basculement (6a) présente au moins un dispositif de contact (7) monté réglable en hauteur sur le bâti (2) et/ou un moyen de réception de charge (3) monté réglable en hauteur, qui est réalisé pour abaisser une partie de fond (BA2) de la marchandise de détail (4), qui est tournée vers le moyen de butée (5), afin de basculer la marchandise de détail (4) jusque dans sa position finale (EL).

9. Convoyeur continu au sol selon l'une des revendications 1 à 8, **caractérisé en ce que** le dispositif de contact (7) est formé par une tige fixe, notamment une tige cylindrique circulaire (7b), ou par un rouleau de contact (7a) monté rotatif, notamment entraîné, qui, dans sa position de garde (VP), est positionné sous le plan de convoyage (E) ou dans le plan de convoyage (E).

10. Convoyeur continu au sol selon l'une quelconque des revendications 1 à 9, dans lequel le convoyeur continu au sol est réalisé sous la forme d'au moins un convoyeur à rouleaux (1a) et présente une pluralité de rouleaux (3a) montés rotatifs sur le bâti (2) et disposés à distance les uns des autres, en tant que moyens de réception de charge (3), lesquels présentent le plan de convoyage pour les marchandises de détail (4) dont la direction de convoyage (F) s'étend au moins sensiblement transversalement à l'axe de rotation (D) des rouleaux (3a), le moyen de butée (5) étant réalisé pour maintenir dans une position prédéterminée sur les rouleaux (3a) une marchandise de détail (4) transportée sur le plan de convoyage (E) dans la direction de convoyage (F), et le dispositif de basculement (6a) étant réalisé, de faire basculer la marchandise de détail (4) se trouvant sur le moyen de butée (5) sur le plan de convoyage (E) depuis sa position initiale (AL) située sur le plan de convoyage (E) jusque dans une position finale (EL) différente de la position initiale (AL) hors du plan de transport (E) du moyen de réception de charge (3).

11. Convoyeur continu au sol selon la revendication 10, **caractérisé en ce que** le dispositif de basculement (6a) est disposé de manière fixe par rapport au bâti (2) du convoyeur à rouleaux (la) et le dispositif de contact (7) est monté mobile par rapport au bâti (2) de manière à pouvoir être déplacé depuis une position de rangement (VP) jusque dans une position d'actionnement (BP) par rapport aux rouleaux (3a) du convoyeur à rouleaux (1a).

12. Convoyeur continu au sol selon la revendication 10 ou 11, **caractérisé en ce que** le dispositif de basculement (6a) permet au moyen de butée (5) de basculer autour d'un axe de basculement orienté au moins sensiblement longitudinalement ou transversalement par rapport aux axes de rotation (D) des rouleaux (3a).

13. Convoyeur continu au sol selon l'une des revendications 10 à 12, **caractérisé en ce que** le dispositif de contact (7) est réalisé par une plaque de support (7d) présentant au moins une découpe (16) pour l'un des rouleaux (3a) du convoyeur à rouleaux (1), la plaque de support (7d) étant configurée pour soulever et faire pivoter, en la supportant par le bas, une partie de fond de la marchandise de détail (4) afin de faire basculer la marchandise de détail (4) dans sa position finale (EL) .

14. Système (30) présentant :
au moins un premier convoyeur continu au sol (32) selon l'une des revendications précédentes, et
au moins un deuxième convoyeur continu au sol (34), de préférence selon l'une des revendications précédentes, qui est disposé au moins par secteurs en dessous du premier convoyeur continu (32).
